# EUROPÄISCHE PATENTSCHRIFT

(11) **EP 2 849 563 B1**
(45) Veröffentlichungstag und Bekanntmachung des Hinweises auf die Patenterteilung: **22.01.2020**
(21) Anmeldenummer: 13723472.0
(22) Anmeldetag: 14.05.2013
(51) Int. Cl.: A01N 25/04, A01N 25/18, A01N 25/20, A01N 25/34, A01N 53/00

(54) **INSEKTIZIDE WASSER-IN-ÖL (W/O) FORMULIERUNG**
INSECTICIDAL WATER IN OIL FORMULA
FORMULE INSECTICIDE EAU DANS L'HUILE

(30) Priorität: 16.05.2012 EP 12168250
(43) Veröffentlichungstag der Anmeldung: 25.03.2015
(73) Patentinhaber: Bayer CropScience AG, 40789 Monheim am Rhein (DE)
(72) Erfinder: KIJLSTRA, Johan, 51519 Odenthal (DE); AKLE, Francois, 75005 Paris (FR); BERNI, José, F-30300 Beaucaire (FR); HEINRICH, Jean-Luc, F-34200 Sete (FR)
(74) Vertreter: BIP Patents
(86) Internationale Anmeldenummer: PCT/EP2013/059917
(87) Internationale Veröffentlichungsnummer: WO 2013/171199

(56) Entgegenhaltungen:
- WO-A2-2007/131679
- DE-A1-102006 023 413
- FR-A- 992 736
- GB-A- 727 577
- US-A1- 2007 191 230
- US-A1- 2008 318 786

## Beschreibung

Die Erfindung betrifft eine insektizide Wasser-in-Öl (W/O) Formulierung mit mindestens einem insektiziden Wirkstoff und mindestens einem Brandsalz sowie die Herstellung dieser Formulierung. Die erfindungsgemäße Formulierung eignet sich insbesondere zur Behandlung von geeigneten Trägermaterialen, insbesondere von Papierträgern in einem kostengünstigen Einschrittprozess mit Hilfe konventioneller Applikationsmethoden. Darüber hinaus betrifft die vorliegende Erfindung insektizide, glimmbare Produkte, welche durch die Behandlung eines Trägermaterials mit der erfindungsgemäßen Formulierung hergestellt werden können.

US-A-2009/0163582 beschreibt eine Wasser-in-Öl (W/O) Formulierung bei der als Emulsionsmittel ein Polyglycerolfettsäureester oder ein Sorbitanfettsäureester, als Wirkstoff ein Pestizid z.B. ein Pyrethroid und als Lösungsmittel Acetylester, ein Methylester, ein Acetyltributylcitrat, ein weißes Mineralöl oder eine Kombination davon eingesetzt wird. Bei dieser Formulierung handelt es sich um eine Endverbraucher Aerosol-Formulierung.

WO-A-2007/131679 beschreibt ein mit einem insektiziden Wirkstoff getränktes Papier. Das Papier wird dabei in einem Zweischrittverfahren hergestellt, bei dem zunächst das Papier mit einer wässrigen 6%igen Kaliumnitratlösung vorbehandelt, danach getrocknet und dann in einem weiteren Schritt mit einer Wirkstofflösung imprägniert wird. WO-A-2007/131679 offenbart keine Formulierung, bei dem das Papier in einem Einschrittverfahren insbesondere mit einem insektiziden Wirkstoff und dem Kaliumnitratsalz behandelt werden kann.

WO-A-2011/092722 beschreibt ein mit einem insektiziden Wirkstoff getränktes Papier, das auch in einem Zweischrittverfahren hergestellt wird. Analog dem Verfahren der WO-A-2007/131679 wird zunächst das Papier mit einem Kaliumnitrat behandelt, bevor das Papier nach Trocknung mit dem Wirkstoff imprägniert wird.

Aufgabe der vorliegenden Erfindung war es eine Formulierung zur Verfügung zu stellen, die angesichts eines insektiziden Wirkstoffs (d.h. z.B. eines Pyrethroides) und eines Brandsalzes physikalischchemisch stabil ist und sich insbesondere für die Behandlung eines Trägermaterials wie beispielsweise eines Papiers eignet. Die Formulierung soll es vorzugsweise ermöglichen, dass das Trägermaterial in einem kostengünstigen und industriell robustem Einschrittprozess behandelt werden kann. Bei diesem Einschrittprozess wird das erforderliche Auftragsgewicht der erfindungsgemäßen Formulierung in einem Verfahrensschritt auf das Trägermaterial appliziert, so dass das Trägermaterial danach ausreichend und homogen verteilt die funktionellen Formulierungskomponenten wie bespielweise den Wirkstoff und das Brandsalz enthält.

Die im Stand der Technik beschriebenen Formulierungen eignen sich für die Lösung dieser Aufgabe nicht. Insbesondere ist es mit diesen bekannten Formulierungen nicht möglich, einen insektiziden Wirkstoff gemeinsam mit dem erforderlichen Brandsalz in einer Formulierung zu kombinieren und für den erfindungsgemäßen Zweck einzusetzen. Insbesondere sind solche Formulierungen nicht physikalisch-chemisch ausreichend stabil (gegenüber Koaleszens und Aufrahmung) und haben nicht die für den erfindungsgemäß erforderlichen Zweck notwendigen rheologischen Eigenschaften bzw. können nicht ohne Weiteres an konventionelle Maschinen und Methoden zur Applikation der Formulierung auf ein geeignetes Trägermaterial angepasst werden.

Überraschenderweise wurde nun gefunden, dass die Aufgabe durch eine Wasser-in-Öl (W/O) Formulierung umfassend
a) ein grenzflächenaktives Emulgiersystem, welches in einer 16%-Kaliumnitratsalzlösung eine Löslichkeit bei einer Temperatur von 20°C von weniger als 1g/L aufweist, wobei ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen eingesetzt wird und zumindest noch ein weiteres nichtionisches grenzflächenaktives Mittel in diesem Emulgiersystem vorhanden ist, wobei dieses weitere, nichtionische grenzflächenaktive Mittel einen HLB-Wert im Bereich von etwa 8 bis etwa 18 hat,
b) mindestens ein nicht-wässriges Lösungsmittel,
c) mindestens ein Brandsalz,
d) mindestens einen insektiziden Wirkstoff, wobei der mindestens eine insektizide Wirkstoff ein Pyrethroid ist,
   und
e) Wasser,
gelöst wird.

Eine W/O-Formulierung beschreibt generell ein Mehrphasen-System, bei der eine wässrige Phase in einer kontinuierlichen Ölphase dispergiert vorliegt. Der Begriff "Öl" steht in diesem Kontext übergreifend für wasserunlösliche Flüssigkeiten und Lösungsmittel, welche in der Mischung mit Wasser oder wässrige Salzlösungen eine Phasentrennung bewirken. Beispielweise sind aliphatische und aromatische Lösungsmittel, pflanzliche und tierische Öle und deren Derivate, Duftstoffe oder Mischungen davon.

Experimentell differenziert man zwischen einer W/O- und einer O/W-Formulierungen durch die Bestimmung der spezifischen Leitfähigkeit. Wässrige Salzlösungen mit einer Salzkonzentration von 5 Gew. % und höher haben typischerweise eine hohe spezifische Leitfähigkeit im mS/cm-Bereich, während die spezifische Leitfähigkeit von aliphatischen und aromatischen Lösungsmittel typischerweise im µS/cm-Bereich oder darunter liegen. Daraus folgend wird eine brandsalzhaltige Formulierung experimentell als W/O Formulierung eingestuft, wenn deren spezifische Leitfähigkeit geringer als 0,1 mS/cm ist. Die Leitfähigkeit der vorliegenden erfindungsgemäßen W/O Formulierung ist deshalb vorzugsweise geringer als 0,1 mS/cm, gemessen bei Raumtemperatur (20°C).

Als ein grenzflächenaktives Emulgiersystem eignen sich für die erfindungsgemäße W/O Formulierungen grenzflächenaktive Emulgatoren, welche jeweils in einer 16%-Kaliumnitratsalzlösung eine Löslichkeit (wobei die Löslichkeit mit konventionellen Methoden bei einer Temperatur von 20°C gemessen wird) von weniger als 1g/L aufweisen.

Als grenzflächenaktive Emulgiersysteme, die in einer 16%-Kaliumnitratsalzlösung eine Löslichkeit von weniger als 1g/L aufweisen, eignen sich nichtionische, grenzflächenaktive Emulgatoren (auch als nichtionische grenzflächenaktive Mittel bezeichnet) mit einem HLB-Wert im Bereich von etwa 2 bis etwa 10, vorzugsweise 2 bis 10, noch bevorzugter zwischen etwa 2 bis etwa 8, vorzugsweise 2 bis 8 und besonders bevorzugt zwischen etwa 3 und etwa 6, vorzugsweise zwischen 3 und 6. Einige der erfindungsgemäß verwendbaren grenzflächenaktiven Mittel sind beispielsweise in Kirk-Othmer, "Encyclopedia of Chemical Technology", 3. Aufl., 1979, Band 8, Seite 913, aufgelistet.

Der HLB-Wert (Hydrophile-Lipophile-Balance) ist eine von W. C. Griffin (J. Soc. Cosmetic Chemists, 1, 311 (1949)) definierte empirische Skala, die die amphiphile Natur von emulgierenden Mitteln (insbesondere von nichtionischen grenzflächenaktiven Mitteln) ausdrückt. Den am wenigsten hydrophilen grenzflächenaktiven Mitteln werden die niedrigsten HLB-Werte zugeordnet. Verfahren zur Feststellung des HLB sind im Fachgebiet gut bekannt, und jedes von derartigen Verfahren kann für die HLB-Bestimmung angewandt werden. Eine Beschreibung des HLB-Systems und Verfahren zur HLB-Feststellung sind in "The HLB-System: a time saving guide to emulsifier selection", ICI Americas Inc., Wilmington, Delaware, 1976, beschrieben.

Erfindungsgemäß geeignete nichtionische grenzflächenaktive Emulgatoren sind bevorzugt ausgewählt aus der Gruppe bestehend aus Alkylphenolethoxylate, Alkanolethoxylate, Alkylaminethoxylate, Sorbitanester (wie Spans) und deren Ethoxylate (wie Tweens), Ricinusölethoxylate, Ethyleneoxid/Propylenoxidblockcopolymere, Alkanol/Propylenoxid/Ethylenoxid-copolymere, Polyglycerole und Polyglycerolester.

Durch Veränderung des Ethoxylierungsgrades kann das Hydrophilität/Liphophilität Gleichgewicht (HLB-Wert) bei nichtionischen grenzflächenaktiven Mitteln eingestellt werden.

Beispielhaft für die Erfindung verwendbare nichtionische grenzflächenaktive Emulgatoren für W/O-Formulierungen sind (Reihenfolge der Auflistung: Markenname, HLB-Wert, Firma); Brij 52 POE-(2)-cetylalkohol; 5,3; Croda; Brij 72 POE-(2)-stearylalkohol, 4,9, Croda; Brij 92V POE-(2)-oleylalkohol, 4,9,Croda; Disponil TA 1, 3,Cognis; Span 20, Sorbitanmonolaurat, 8,6, Croda; Span 40 Sorbitanmonopalmitat, 6,7, Croda; Span 60 Sorbitanmonostearat, 4,7, Croda; Span 80 Sorbitanmonooleat, 4,3, Croda; Span 85, Sorbitan trioleat, 1,8, Croda; Hostacerin SFO, 3-4, Clariant; AGNIQUE® FOH 7OC-2 EO (Synative 3370) Cognis; Dehypon OCP 502, Cognis; Dehypon OCP 503, Cognis; AGNIQUE® FOH 9OC-5, 4,9, Cognis; AGNIQUE® FOH 9OC-3, 6,6, Cognis; AGNIQUE® FOH 5OC-4, 9, Cognis; Genapol O 020, 5, Clariant; Atlox 4912, 5-6; Atlox 4914, 5-7, Emulsogen V 1816, 6, Clariant; Emulsogen V 1816-1, 8, Clariant; Genapol PF 10, 2, Clariant; Genapol PF 20 P, 4, Clariant; Genapol PF 40, 6, Clariant; Genapol 2822, 6, Clariant; Genapol 3970, 3, Clariant; Agrimer AL 25, 3-5, ISP; Agrimer AL 23, 9-11, ISP; Agrimer AL 31, 7-8 , ISP; Agrimer VA-3, 4-7, ISP; LAMEFORM® TGI, Cognis; Monomuls 90-0 18, Cognis; DEHYMULS® PGPH, Cognis; Hostacerin DGI, 5, Clariant; GW 1250 (HLB 5), 5, Evonik.

Als grenzflächenaktives Emulgiersystem eignen sich erfindungsgemäß auch ionische grenzflächenaktiver Mittel, welche in einer 16%-Kaliumnitratsalzlösung eine Löslichkeit (wobei die Löslichkeit mit konventionellen Methoden bei einer Temperatur von 20°C gemessen wird) von weniger als 1g/L aufweist.

Die ionischen grenzflächenaktive Mittel für das Emulgiersystem werden ausgewählt aus der Gruppe anionischer grenzflächenaktiver Mittel bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatisches und aromatische Phosphatester, alkoxylierte Phosphatester, Alkylcarboxylate sowie Polycarboxylate; jeweils als Salze mit einwertigen oder mehrwertigen Kationen (beispielweise Alkalimetallsalze, Erdalkalimetallsalze, Ammoniumsalze) oder zusammen mit einem kationischen grenzflächenaktiven Mittel (wie beispielsweise aliphatische primäre, sekundäre und tertiäre Amine aus der Armeen®-Serie von AkzoNobel).

Besonders bevorzugt werden anionische grenzflächenaktive Mittel für das Emulgiersystem ausgewählt aus der Gruppe bestehend aus aliphatischen Alkoholsulfaten, Alkylarylsulfonaten oder Lignosulfonaten; jeweils als Salze mit einwertigen oder mehrwertigen Kationen.

Vorzugsweise liegen die anionischen grenzflächenaktiven Mittel in der erfindungsgemäßen Formulierung jeweils als Metallsalze mit mehrwertigem Kation (beispielweise Kalziumsalz, Magnesiumsalz, Aluminiumsalz und Eisensalz) vor.

Als Salze mehrwertiger Kationen werden vorzugsweise Erdalkalimetallsalze und noch bevorzugter Kalziumsalze eingesetzt.

In einer weiteren bevorzugten Ausführungsform der Erfindung wird für die Formulierung als mindestens ein Emulgiersystem für W/O-Formulierungen ein Emulgiersystem ausgewählt aus der Gruppe bestehend aus: Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salze mehrwertiger Kationen, vorzugsweise Erdalkalimetallsalze und noch bevorzugter Kalziumsalze, eingesetzt.

Beispielhaft für ein solches Emulgiersystem sind Kalziumsalze von Alkylarylsulfonate CALSOGEN® 4814 (Clariant) und NANSA EVM 70/2E (Huntsmann), Emulsifier 1371 A (Clariant) sowie beispielsweise Kalzium-, Magnesium- und Aluminiumseifen unterschiedlichster Fettsäuren (wie beispielweise Liga Calciumstearat CPR-5, Ligamed MF-2-V und Ligastar ALG-V von Peter Greven Fett-Chemie GmbH & Co. KG).

In einer weiteren bevorzugten Ausführungsform der Erfindung wird für die Formulierung als mindestens ein Emulgiersystem für W/O-Formulierungen ein nichtionisches, grenzflächenaktives Mittel ausgewählt aus der Gruppe bestehend aus Alkylphenolethoxylate, Alkanolethoxylate, Alkylaminethoxylate, Sorbitanester und deren Ethoxylate, Ricinusölethoxylate, Ethyleneoxid/Propylenoxidblockcopolymere, Alkanol/Propylenoxid/Ethylenoxidcopolymere, Polyglycerole, Polyglycerolester oder ein Emulgiersystem ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salze mehrwertiger Kationen, eingesetzt.

Generell umfasst die W/O Formulierung 0,1 bis 15 Gew.-%, vorzugsweise 0,5 bis 10 Gew.-% noch bevorzugter zwischen 1,5 bis 5 Gew.-% mindestens eines grenzflächenaktiven Emulgiersystems, welches in einer 16%-Kaliumnitratsalzlösung eine Löslichkeit von weniger als 1g/L aufweist.

Die erfindungsgemäße Wasser-in-Öl Formulierung enthält neben dem oben beschriebenen grenzflächenaktiven Emulgatorsystem zusätzlich mindestens noch ein weiteres nichtionisches grenzflächenaktives Mittel, wobei dieses weitere grenzflächenaktive Mittel einen HLB-Wert im Bereich von etwa 8 bis etwa 18, vorzugsweise 8 bis 18, noch bevorzugter zwischen etwa 10 bis etwa 16, vorzugsweise 10 bis 16, noch mehr bevorzugter zwischen etwa 11 bis etwa 16, vorzugsweise 11 bis 16 aufweist. Vorzugsweise liegt der Gewichtsanteil dieses weiteren nichtionischen grenzflächenaktiven Mittels zwischen 0,1 bis 10 Gew.-%, vorzugsweise 1 bis 7 Gew.-% bezogen auf die W/O Formulierung.

Beispielhaft für die Erfindung verwendbare zweite grenzflächenaktive Mittel sind (Reihenfolge der Auflistung: Markenname, HLB-Wert, Firma); Arkopal N 040, 9, Clariant; Arkopal N 100, 13, Clariant; Arkopal N 150, 15, Clariant; Brij 30 POE-(4)-laurylalkohol, 9,7, Croda; Brij 58 POE-(20)-cetylalkohol, 15,7, Croda; Brij 76 POE-(10)-stearylalkohol, 12,4, Croda; Brij 96V POE-(10)-oleylalkohol, 12,4, Croda; Brij 98V POE-(20)-oleylalkohol, 15,3, Croda; Lubrol 17A17 POE-(17)-oleylalkohol, 14,9, Croda; Synperonic L11 POE-(11)-laurylalkohol, 15, Croda; Tween 20 POE-(20)-sorbitan monolaurate 16,7; Tween 21 POE-(4)-Sorbitanmonolaurat, 13,3; Tween 40 POE-(20)-Sorbitanmonopalmitate, 15,6; Tween 60 POE-(20)-Sorbitanmonostearat, 14,9; Tween 65 POE-(4)-Sorbitanmonostearat, 9,6; Tween 65 POE-(20)-Sorbitantristearat, 10,5; Tween 80 POE-(20)-Sorbitanmonooleat, 15; Tween 81 POE-(5)-Sorbitanmonooleat, 10; Tween 85 POE-(20)-Sorbitantrioleat, 11; Cremophor RH 40 Polyoxyl 40 Hydrogenated Castor Oil, 14-16, BASF; Cremophor RH 60 PEG-60 Hydrogenated Castor Oil, 15-17, BASF; Atlox 4913, 11-12; Emulsogen V 1816-2, 12, Clariant; Genapol V 4829 , 14, Clariant; Emulsogen V 2436, 11, Clariant; Emulsogen 3510, 11, Clariant.

In einer weiteren Ausführungsform der Erfindung wird vorzugsweise ein weiteres (drittes) anionisches grenzflächenaktives Mittel zu der W/O Formulierung hinzugefügt um insbesondere eine Feineinstellung der Viskositäts-/ und Schaumeigenschaften der Formulierung vorzunehmen. Vorzugsweise liegt dieses anionische grenzflächenaktive Mittel als Salze mit einwertigen Kationen vor. Vorzugsweise liegt der Gewichtsanteil dieses weiteren anionischen grenzflächenaktiven Mittels zwischen 0 bis 10 Gew.-%, vorzugsweise 1 bis 4 Gew.-% bezogen auf die W/O Formulierung.

Nichtwässrige Lösungsmittel, die für die vorliegende Erfindung verwendbar sind, sind weitreichend und haben eine geringe Löslichkeit in Wasser. Besonders geeignete nichtwässrige Lösungsmittel zur Verwendung in der vorliegenden W/O-Formulierung beinhalten aromatische Kohlenwasserstoffe, wie beispielsweise Alkylbenzole oder Alkylnapthaline (beispielsweise SOLVESSO 100, SOLVES-SO 150 und SOLVESSO 200, SOLVESSO ist eine eingetragene Marke; Xylole; Reutasolv DI, Reutasolv MP, Reutasolv BP 4201, Reutasolv ist eine eingetragene Marke); aliphatische Lösungsmittel (z.B. Kerosin, Exxsol D60 und D80 von ExxonMobil), Ketone (z.B. Cyclohexanon oder Methlycyclohexanon); Alkohole (z.B. Benzylalkohol, Furfurylalkohol oder Butanol); N-Alkylpyrrolidone (z.B. N-Methylpyrrolidon oder N-Octylpyrrolidon); Dimethylamide von Fettsäuren (z.B. C₈-C₁₀-Fettsäuredimethylamid); pflanzliche und tierische Öle und chlorierte Kohlenwasserstoffe (z.B. Chlorbenzole).

Der Begriff pflanzliche Öle, wie er hier verwendet wird, schließt Öle aus allen ölproduzierenden Pflanzen ein, wie Rapsöl, Sojaöl, Palmöl, Sonnenblumenöl, Baumwollöl, Maisöl, Leinöl, Kokosnußöl, Distelöl oder Rizinusöl. Der Ausdruck tierisches Öl, wie er hier verwendet wird, schließt Öle aus ölproduzierenden Tieren ein, wie Talgöl. Weitere Beispiele nichtwässriger Lösungsmittel sind die Umesterungsprodukte dieser Öle, wie Alkylester, beispielsweise Rapsölmethylester, wie Radia 7961 (Fina Chemicals, Belgien), oder Rapsölethylester. Pflanzenöle sind vorzugsweise Ester von C₁₀-C₂₂-, vorzugsweise C₁₂-C₂₂-Fettsäuren. Derartige C₁₀-C₂₂-Fettsäureester sind beispielsweise Ester von ungesättigten oder gesättigten C₁₀-C₂₂-Fettsäuren, insbesondere mit einer geraden Anzahl von Kohlenstoffatomen, wie beispielsweise cis-Erucasäure, Isoerucasäure, Laurinsäure, Palmitinsäure, Myristinsäure, insbesondere C₁₈-Fettsäuren, wie Stearinsäure, Linolsäure oder Linolensäure. Beispiele für C₁₀-C₂₂-Fettsäureester sind solche Ester, die durch Umsetzen von Glycerin oder Glykol mit C₁₀-C₂₂-Fettsäuren erhältlich sind und die beispielsweise in Ölen aus ölproduzierenden Pflanzen enthalten sind, sowie (C₁-C₂₀)Alkyl(C₁₀-C₂₂)-Fettsäureester, die beispielsweise durch Umesterung dieser Glycerin- oder Glykol-C₁₀-C₂₂-Fettsäureester mit C₁-C₂₀-Alkoholen (wie Methanol, Ethanol, Propanol oder Butanol) erhalten werden können. Die Umesterung kann nach in der Technik allgemein bekannten Verfahren vorgenommen werden, die beispielsweise in Römpps Chemie Lexikon, 9. Aufl., Bd. 2, Seite 1343, Thieme Verlag, Stuttgart, beschrieben sind. Bevorzugt als C₁-C₂₀-Alkyl-C₁-C₂₂-Fettsäureester verwendet werden Methylester, Ethylester, n-Propylester, Isopropylester, n-Butylester, Isobutylester, n-Pentylester, Isopentylester, Neopentylester, n-Hexylester, Isohexylester, n-Heptylester, Isoheptylester, n-Octylester, 2-Ethylhexylester, n-Nonylester, Isononylester und Dodecylester. Als Glycerin- und Glykol-C₁₀-C₂₂-Fettsäureester werden die einheitlichen oder gemischten Glycerin- oder Glykolester von C₁₀-C₂₂-Fettsäuren bevorzugt, insbesondere von Fettsäuren mit einer geraden Anzahl von Kohlenstoffatomen, wie cis-Erucasäure, Isoerucasäure, Laurinsäure, Palmitinsäure, Myristinsäure, insbesondere einer C₁₈-Fettsäure, wie Stearinsäure, Linolsäure oder Linolensäure.

Erfindungsgemäß besonders bevorzugte nichtwässrige Lösungsmittel sind Dimethylamide von Fettsäuren (wie beispielsweise Genagen), pflanzliche Öle (wie beispielsweise Rapsölmethylester) und Alkylnapthaline (wie beispielsweise SOLVESSO).

In einer bevorzugten Ausführungsform ist der Wirkstoff löslich in dem ausgewählten Lösungsmittel. Es kann vorteilhaft sein, insbesondere dann, wenn die aktive Substanz in den oben genannten Lösungsmittel nicht sehr gut löslich ist, ein oder mehrere Co-Lösungsmittel einzubeziehen.

Erfindungsgemäß umfasst die W/O-Formulierung vorzugsweise 5 bis 75 Gew.-%, vorzugsweise 15 bis 55 Gew.-% zumindest eines nichtwässrigen Lösungsmittels als Bestandteil der erfindungsgemäßen W/O-Formulierung.

Ein weiterer Bestandteil der erfindungsgemäßen Formulierung ist mindestens ein Brandsalz. Durch Brandsalze können Trägermaterialien, die mit der erfindungsgemäßen Formulierung behandelt werden, nach dem Anzünden und dem anschließenden Löschen der Flamme, kontrolliert und gleichmäßig verglimmen. Somit kann das Brandsalz die Brennbarkeit des behandelten Trägermaterials in Bezug auf Geschwindigkeit und Vollständigkeit der Verbrennung gewährleisten, ohne ein spontanes Entflammen zu ermöglichen.

Ein Brandsalz ist vorzugsweise ausgewählt aus der Gruppe von Nitratsalzen (z.B. Kaliumnitrat, Chromnitrat, Eisennitrat, Kupfernitrat, Natriumnitrat). Bevorzugt wird als Brandsalz Kaliumnitrat eingesetzt.

Erfindungsgemäß umfasst die W/O-Formulierung vorzugsweise 6 bis 25 Gew.-%, vorzugsweise 8 bis 15 Gew.-% mindestens eines Brandsalzes als Bestandteil der erfindungsgemäßen W/O-Formulierung.

In der erfindungsgemäßen W/O-Formulierung wird mindestens ein insektizider Wirkstoff ausgewählt aus der Gruppe der Pyrethroide eingesetzt. Darüber hinaus können auch zwei oder mehrere insektizide Wirkstoffe gleichzeitig auf dem Trägermaterial, insbesondere dem Papierträgermaterial, vorgesehen sein, wie beispielsweise 2, 3, 4 oder mehr insektizide Wirkstoffe.

Pyrethroide im Sinne der Erfindung sind insbesondere ausgewählt aus der Gruppe bestehend aus Acrinathrin, Allethrin, d-Allethrin, d-trans Allethrin, d-cis-trans Allethrin, Alphamethrin, Bathrin, Bifenthrin, Bioallethrin, S-Bioallethrin, Bioallethrin-S-cyclopentenyl-isomer, Bioethanomethrin, Biopermethrin, Bioresmethrin, Clocythrin, Chlovaporthrin, Cycloprothrin, Cyfluthrin, beta-Cyfluthrin, Cyhalothrin, gamma-Cyhalothrin, lambda-Cyhalothrin, Cypermethrin, alpha-Cypermethrin, beta-Cypermethrin, cis-Cypermethrin, theta-Cypermethrin, zeta-Cypermethrin, Cyphenotrin, Deltamethrin, Depallethrin, Empenthrin, Empenthrin (1R-isomer), Esbiothrin, Esfenvalerat, Etophenprox, Fenfluthrin, Fenpropathrin, Fenpyrithrin, Fenvalerat, Flubrocythrinate, Flucythrinat, tau-Fluvalinate, Flumethrin, Fubfenprox, Halfenprox, Imiprothrin, Kadethrin, Metofluthrin, Neopynamin, Permethrin, cis-Permethrin, trans-Permethrin, Phenothrin, Phenothrin (1R-trans Isomer), d-Phenothrin, Prallethrin, Profluthrin, Protrifenbute, Pynamin forte, Pyresmethrin, Pyrethrin, Resmethrin, cis-Resmethrin, RU 15525, Silafluofen, Tau-Fluvalinat, Tefluthrin, Tetramethrin (Phthalthrin), Tetramethrin (-1R- Isomer), Terallethrin, Tralomethrin, Transfluthrin, ZXI 8901, Pyrethrins (pyrethrum) und jedwede Mischung der zuvor genannten Wirkstoffe.

Besonders bevorzugt wird als Pyrethroid Esbiothrin, lambda-Cyhalothrin, d-Allethrin, S-Bioallethrin, Prallethrin, Metofluthrin, Pyrethrum und/oder Transfluthrin verwendet. Ganz besonders bevorzugt ist Transfluthrin.

Erfindungsgemäß umfasst die W/O-Formulierung vorzugsweise 0,1 bis 20 Gew.-%, vorzugsweise 1 bis 10 Gew.-% zumindest eines Insektizides als Bestandteil des erfindungsgemäßen W/O-Formulierung.

Als weitere insektizide Wirkstoffe können für die erfindungsgemäße Formulierung beispielsweise folgende Verbindungen verwendet werden:
(1) Acetylcholinesterase (AChE) Inhibitoren, wie beispielsweise Carbamate, z.B. Alanycarb (11-1-1), Aldicarb (11-1-2), Bendiocarb (II-3), Benfuracarb (II-1-4), Butocarboxim (II-1-5), Butoxycarboxim (II-1-6), Carbaryl (II-1-7), Carbofuran (II-1-8), Carbosulfan (II-1-9), Ethiofencarb (II-1-10), Fenobucarb (II-1-11), Formetanate (II-1-12), Furathiocarb (II-1-13), Isoprocarb (II-1-14), Methiocarb (II-1-15), Methomyl (II-1-16), Metolcarb (II-1-17), Oxamyl (II-1-18), Pirimicarb (II-1-19), Propoxur (II-1-20), Thiodicarb (II-1-21), Thiofanox (II-1-22), Triazamate (II-1-23), Trimethacarb (II-1-24), XMC (II-1-25) und Xylylcarb (II-1-26); oder Organophosphate, z.B. Acephate (II-1-27), Azamethiphos (II-1-28), Azinphos-ethyl (II-1-29), Azinphos-methyl (II-1-30), Cadusafos (II-1-31), Chlorethoxyfos (II-1-32), Chlorfenvinphos (II-1-33), Chlormephos (II-1-34), Chlorpyrifos (II-1-35), Chlorpyrifos-methyl (II-1-36), Coumaphos (II-1-37), Cyanophos (II-1-38), Demeton-S-methyl (II-1-39), Diazinon (II-1-40), Dichlorvos/DDVP (II-1-41), Dicrotophos (II-1-42), Dimethoate (II-1-43), Dimethylvinphos (II-1-44), Disulfoton (II-1-45), EPN (II-1-46), Ethion (II-1-47), Ethoprophos (II-1-48), Famphur (II-1-49), Fenamiphos (II-1-50), Fenitrothion (II-1-51), Fenthion (II-1-52), Fosthiazate (II-1-53), Heptenophos (II-1-54), Imicyafos (II-1-55), Isofenphos (II-1-56), Isopropyl O-(methoxyaminothio-phosphoryl) salicylat (II-1-57), Isoxathion (II-1-58), Malathion (II-1-59), Mecarbam (II-1-60), Methamidophos (II-1-61), Methidathion (II-1-62), Mevinphos (II-1-63), Monocrotophos (II-1-64), Naled (II-1-65), Omethoate (II-1-66), Oxydemeton-methyl (II-1-67), Parathion (II-1-68), Parathion-methyl (II-1-69), Phenthoate (II-1-70), Phorate (II-1-71), Phosalone (II-1-72), Phosmet (II-1-73), Phosphamidon (II-1-74), Phoxim (II-1-75), Pirimiphos-methyl (II-1-76), Profenofos (II-1-77), Propetamphos (II-1-78), Prothiofos (II-1-79), Pyraclofos (II-1-80), Pyridaphenthion (II-1-81), Quinalphos (II-1-82), Sulfotep (II-1-83), Tebupirimfos (II-1-84), Temephos (II-1-85), Terbufos (II-1-86), Tetrachlorvinphos (II-1-87), Thiometon (II-1-88), Triazophos (II-1-89), Trichlorfon (II-1-90) und Vamidothion (II-1-91).
(2) GABA-gesteuerte Chlorid-Kanal-Antagonisten, wie beispielsweise Cyclodien-organochlorine, z.B. Chlordane (II-2-1) und Endosulfan (II-2-2); oder Phenylpyrazole (Fiprole), z.B. Ethiprole (II-2-3) und Fipronil (II-2-4).
(3) Natrium-Kanal-Modulatoren / Spannungsabhängige Natrium-Kanal-Blocker, wie beispielsweise Pyrethroide, z.B. Acrinathrin (II-3-1), Allethrin (II-3-2), d-cis-trans Allethrin (II-3-3), d-trans Allethrin (II-3-4), Bifenthrin (II-3-5), Bioallethrin (II-3-6), Bioallethrin S-cyclopentenyl Isomer (II-3-7), Bioresmethrin (II-3-8), Cycloprothrin (II-3-9), Cyfluthrin (II-3-10), beta-Cyfluthrin (II-3-11), Cyhalothrin (II-3-12), lambda-Cyhalothrin (II-3-13), gamma-Cyhalothrin (II-3-14), Cypermethrin (II-3-15), alpha-Cypermethrin (II-3-16), beta-Cypermethrin (II-3-17), theta-Cypermethrin (II-3-18), zeta-Cypermethrin (II-3-19), Cyphenothrin [(1R)-trans-Isomere] (II-3-20), Deltamethrin (II-3-21), Empenthrin [(EZ)-(1)-Isomere) (II-3-22), Esfenvalerate (II-3-23), Etofenprox (II-3-24), Fenpropathrin (II-3-25), Fenvalerate (II-3-26), Flucythrinate (II-3-27), Flumethrin (II-3-28), tau-Fluvalinate (II-3-29), Halfenprox (II-3-30), Imiprothrin (II-3-31), Kadethrin (II-3-32), Permethrin (II-3-33), Phenothrin [(1R)-trans-Isomer) (II-3-34), Prallethrin (II-3-35), Pyrethrine (pyrethrum) (II-3-36), Resmethrin (II-3-37), Silafluofen (II-3-38), Tefluthrin (II-3-39), Tetramethrin (II-3-40), Tetramethrin [(1R)- Isomere)] (11-3-41), Tralomethrin (11-3-42) und Transfluthrin (II-3-43); oder DDT (II-3-44); oder Methoxychlor (II-3-45).
(4) Nikotinerge Acetylcholin-Rezeptor (nAChR) Agonisten, wie beispielsweise Neonikotinoide, z.B. Acetamiprid (II-4-1), Clothianidin (II-4-2), Dinotefuran (II-4-3), Imidacloprid (II-4-4), Nitenpyram (II-4-5), Thiacloprid (II-4-6) und Thiamethoxam (II-4-7); oder Nikotin (II-4-8).
(5) Nikotinerge Acetylcholin-Rezeptor (nAChR) allosterische Aktivatoren, wie beispielsweise Spinosine, z.B. Spinetoram (II-5-1) und Spinosad (II-5-2).
(6) Chlorid-Kanal-Aktivatoren, wie beispielsweise Avermectine/Milbemycine, z.B. Abamectin (II-6-1), Emamectin-benzoat (II-6-2), Lepimectin (II-6-3) und Milbemectin (II-6-4).
(7) Juvenilhormon-Imitatoren, wie beispielsweise Juvenilhormon-Analoge, z.B. Hydroprene (II-7-1), Kinoprene (II-7-2) und Methoprene (II-7-3); oder Fenoxycarb (II-7-4); oder Pyriproxyfen (II-7-5).
(8) Wirkstoffe mit unbekannten oder nicht spezifischen Wirkmechanismen, wie beispielsweise Alkylhalide, z.B. Methylbromid (II-8-1) und andere Alkylhalide; oder Chloropicrin (II-8-2); oder Sulfurylfluorid (II-8-3); oder Borax (II-8-4); oder Brechweinstein (II-8-5).
(9) Selektive Fraßhemmer, z.B. Pymetrozine (II-9-1); oder Flonicamid (II-9-2).
(10) Milbenwachstumsinhibitoren, z.B. Clofentezine (II-10-1), Hexythiazox (II-10-2) und Diflovidazin (II-10-3); oder Etoxazole (II-10-4).
(11) Mikrobielle Disruptoren der Insektendarmmembran, z.B. Bacillus thuringiensis Subspezies israelensis (II-11-1), Bacillus sphaericus (II-11-2), Bacillus thuringiensis Subspezies aizawai (II-11-3), Bacillus thuringiensis Subspezies kurstaki (II-11-4), Bacillus thuringiensis Subspezies tenebrionis (II-11-5) und BT Pflanzenproteine: Cry1Ab, Cry1Ac, Cry1Fa, Cry2Ab, mCry3A, Cry3Ab, Cry3Bb, Cry34/35Ab1 (II-11-6).
(12) Inhibitoren der oxidativen Phosphorylierung, ATP-Disruptoren, wie beispielsweise Diafenthiuron (II-12-1); oder Organozinnverbindungen, z.B. Azocyclotin (II-12-2), Cyhexatin (II-12-3) und Fenbutatin-oxid (II-12-4); oder Propargite (II-12-5); oder Tetradifon (II-12-6).
(13) Entkoppler der oxidativen Phoshorylierung durch Unterbrechung des H-Protongradienten, wie beispielsweise Chlorfenapyr (II-13-1), DNOC (II-13-2) und Sulfluramid (II-13-3).
(14) Nikotinerge Acetylcholin-Rezeptor-Antagonisten, wie beispielsweise Bensultap (II-14-1), Cartaphydrochlorid (II-14-2), Thiocyclam (II-14-3) und Thiosultap-Natrium (II-14-4).
(15) Inhibitoren der Chitinbiosynthese, Typ 0, wie beispielsweise Bistrifluron (II-15-1), Chlorfluazuron (II-15-2), Diflubenzuron (II-15-3), Flucycloxuron (II-15-4), Flufenoxuron (II-15-5), Hexaflumuron (II-15-6), Lufenuron (II-15-7), Novaluron (II-15-8), Noviflumuron (II-15-9), Teflubenzuron (II-15-10) und Triflumuron (II-15-11).
(16) Inhibitoren der Chitinbiosynthese, Typ 1, wie beispielsweise Buprofezin (II-16-1).
(17) Häutungsstörende Wirkstoffe, Dipteran, wie beispielsweise Cyromazine (II-17-1).
(18) Ecdyson-Rezeptor Agonisten, wie beispielsweise Chromafenozide (II-18-1), Halofenozide (II-18-2), Methoxyfenozide (II-18-3) und Tebufenozide (II-18-4).
(19) Oktopaminerge Agonisten, wie beispielsweise Amitraz (II-19-1).
(20) Komplex-III-Elektronentransportinhibitoren, wie beispielsweise Hydramethylnon (II-20-1); oder Acequinocyl (II-20-2); oder Fluacrypyrim (II-20-3).
(21) Komplex-I-Elektronentransportinhibitoren, beispielsweise METI-Akarizide, z.B. Fenazaquin (II-21-1), Fenpyroximate (II-21-2), Pyrimidifen (II-21-3), Pyridaben (II-21-4), Tebufenpyrad (II-21-5) und Tolfenpyrad (II-21-6); oder Rotenone (Derris) (II-21-7).
(22) Spannungsabhängige Natriumkanal-Blocker, z.B. Indoxacarb (II-22-1); oder Metaflumizone (II-22-2).
(23) Inhibitoren der Acetyl-CoA-Carboxylase, wie beispielsweise Tetron- und Tetramsäurederivate, z.B. Spirodiclofen (II-23-1), Spiromesifen (II-23-2) und Spirotetramat (II-23-3).
(24) Komplex-IV-Elektronentransportinhibitoren, wie beispielsweise Phosphine, z.B. Aluminiumphosphid (II-24-1), Calciumphosphid (II-24-2), Phosphin (II-24-3) und Zinkphosphid (II-24-4); oder Cyanid (II-24-5).
(25) Komplex-II-Elektronentransportinhibitoren, wie beispielsweise Cyenopyrafen (II-25-1).
(28) Ryanodinrezeptor-Effektoren, wie beispielsweise Diamide, z.B. Chlorantraniliprole (II-28-1) und Flubendiamide (II-28-2).

Weitere Wirkstoffe mit unbekanntem Wirkmechanismus, wie beispielsweise Amidoflumet (II-29-1), Azadirachtin (II-29-2), Benclothiaz (II-29-3), Benzoximate (II-29-4), Bifenazate (II-29-5), Bromopropylate (II-29-6), Chinomethionat (II-29-7), Cryolite (II-29-8), Cyantraniliprole (Cyazypyr) (II-29-9), Cyflumetofen (II-29-10), Dicofol (II-29-11), Diflovidazin (II-29-12), Fluensulfone (II-29-13), Flufenerim (II-29-14), Flufiprole (II-29-15), Fluopyram (II-29-16), Fufenozide (II-29-17), Imidaclothiz (II-29-18), Iprodione (II-29-19), Meperfluthrin (II-29-20), Pyridalyl (II-29-21), Pyrifluquinazon (II-29-22), Tetramethylfluthrin (II-29-23) und Iodmethan (II-29-24); desweiteren Präparate auf Basis von Bacillus firmus (insbesondere Stamm CNCM I-1582, beispielsweise VOTiVO™, BioNem) (II-29-25) sowie folgende bekannte wirksame Verbindungen: 3-Brom-N-{2-brom-4-chlor-6-[(1-cyclopropylethyl)carbamoyl]phenyl}-1-(3-chlorpyridin-2-yl)-1H-pyrazol-5-carboxamid (II-29-26) (bekannt aus WO2005/077934), 4-{[(6-Brompyrid-3-yl)methyl](2-fluorethyl)amino}furan-2(5H)-on (II-29-27) (bekannt aus WO2007/115644), 4-{[(6-Fluorpyrid-3-yl)methyl](2,2-difluorethyl)amino}furan-2(5H)-on (II-29-28) (bekannt aus WO2007/115644), 4-{[(2-Chlor-1,3-thiazol-5-yl)methyl](2-fluorethyl)amino}furan-2(5H)-on (II-29-29) (bekannt aus WO2007/115644), 4-{[(6-Chlorpyrid-3-yl)methyl](2-fluorethyl)amino}furan-2(5H)-on (II-29-30) (bekannt aus WO2007/115644), Flupyradifurone (II-29-31), 4-{[(6-Chlor-5-fluorpyrid-3-yl)methyl](methyl)amino}furan-2(5H)-on (II-29-32) (bekannt aus WO2007/115643), 4-{ [(5,6-Dichlorpyrid-3-yl)methyl](2-fluorethyl)amino}furan-2(5H)-on (II-29-33) (bekannt aus WO2007/115646), 4-{[(6-Chlor-5-fluorpyrid-3-yl)methyl](cyclopropyl)amino}furan-2(5H)-on (II-29-34) (bekannt aus WO2007/115643), 4-{[(6-Chlorpyrid-3-yl)methyl](cyclopropyl)amino}furan-2(5H)-on (II-29-35) (bekannt aus EP-A-0 539 588), 4-{[(6-Chlorpyrid-3-yl)methyl](methyl)amino}furan-2(5H)-on (II-29-36) (bekannt aus EP-A-0 539 588), {[1-(6-Chlorpyridin-3-yl)ethyl](methyl)oxido-λ⁴-sulfanyliden}cyanamid (II-29-37) (bekannt aus WO2007/149134) und seine Diastereomere {[(1R)-1-(6-Chlorpyridin-3-yl)ethyl](methyl)oxido-λ⁴-sulfanyliden}cyanamid (A) (II-29-38) und {[(1S)-1-(6-Chlorpyridin-3-yl)ethyl](methyl)oxido-λ⁴-sulfanyliden)cyanamid (B) (II-29-39) (ebenfalls bekannt aus WO2007/149134) sowie Sulfoxaflor (II-29-40) und seine Diastereomere [(R)-Methyl(oxido){(1R)-1-[6-(trifluormethyl)pyridin-3-yl]ethyl}-λ⁴-sulfanyliden]cyanamid (A1) (II-29-41) und [(S)-Methyl(oxido) {(1S)-1-[6-(trifluormethyl)pyridin-3-yl]ethyl}-λ⁴-sulfanyliden cyanamid (A2) (II-29-42), bezeichnet als Diastereomerengruppe A (bekannt aus WO 2010/074747, WO 2010/074751), [(R)-Methyl(oxido){(1S)-1-[6-(trifluormethyl)pyridin-3-yl]ethyl}-λ⁴-sulfanyliden]cyanamid (B1) (II-29-43) und [(S)-Methyl(oxido){(1R)-1-[6-(trifluormethyl)pyridin-3-yl]ethyl}-λ⁴-sulfanyliden]cyanamid (B2) (II-29-44), bezeichnet als Diastereomerengruppe B (ebenfalls bekannt aus WO 2010/074747, WO 2010/074751) und 11-(4-Chlor-2,6-dimethylphenyl)-12-hydroxy-1,4-dioxa-9-azadispiro[4.2.4.2]tetradec-11-en-10-on (II-29-45) (bekannt aus WO2006/089633), 3-(4'-Fluor-2,4-dimethylbiphenyl-3-yl)-4-hydroxy-8-oxa-1-azaspiro[4.5]dec-3-en-2-on (II-29-46) (bekannt aus WO2008/067911), 1-{2-Fluor-4-methyl-5-[(2,2,2-trifluorethyl)sulfinyl]phenyl}-3-(trifluormethyl)-1H-1,2,4-triazol-5-amin (II-29-47) (bekannt aus WO2006/043635), [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat (II-29-48) (bekannt aus WO2008/066153), 2-Cyan-3-(difluormethoxy)-N,N-dimethylbenzolsulfonamid (II-29-49) (bekannt ausWO2006/056433), 2-Cyan-3-(difluormethoxy)-N-methylbenzolsulfonamid (II-29-50) (bekannt aus WO2006/100288), 2-Cyan-3-(difluormethoxy)-N-ethylbenzolsulfonamid (II-29-51) (bekannt aus WO2005/035486), 4-(Difluormethoxy)-N-ethyl-N-methyl-1,2-benzothiazol-3-amin-1,1-dioxid (II-29-52) (bekannt aus WO2007/057407), N-[1-(2,3-Dimethylphenyl)-2-(3,5-dimethylphenyl)ethyl]-4,5-dihydro-1,3-thiazol-2-amin (II-29-53) (bekannt aus WO2008/104503), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (II-29-54) (bekannt aus WO2003/106457), 3-(2,5-Dimethylphenyl)-4-hydroxy-8-methoxy-1,8-diazaspiro[4.5]dec-3-en-2-on (II-29-55) (bekannt aus WO2009/049851), 3-(2,5-Dimethylphenyl)-8-methoxy-2-oxo-1,8-diazaspiro[4.5]dec-3-en-4-yl-ethylcarbonat (II-29-56) (bekannt aus WO2009/049851), 4-(But-2-in-1-yloxy)-6-(3,5-dimethylpiperidin-1-yl)-5-fluorpyrimidin (II-29-57) (bekannt aus WO2004/099160), (2,2,3,3,4,4,5,5-Octafluorpentyl)(3,3,3-trifluorpropyl)malononitril (II-29-58) (bekannt aus WO2005/063094), (2,2,3,3,4,4,5,5-Octafluorpentyl)(3,3,4,4,4-pentafluorbutyl)malononitril (II-29-59) (bekannt aus WO2005/063094), 8-[2-(Cyclopropylmethoxy)-4-(trifluormethyl)phenoxy]-3-[6-(trifluormethyl)pyridazin-3-yl]-3-azabicyclo[3.2.1]octan (II-29-60) (bekannt aus WO2007/040280), Flometoquin (II-29-61), PF1364 (CAS-Reg.Nr. 1204776-60-2) (II-29-62) (bekannt aus JP2010/018586), 5-[5-(3,5-Dichlorphenyl)-5-(trifluormethyl)-4,5-dihydro-1,2-oxazol-3-yl]-2-(1H-1,2,4-triazol-1-yl)benzonitril (II-29-63) (bekannt aus WO2007/075459), 5-[5-(2-Chlorpyridin-4-yl)-5-(trifluormethyl)-4,5-dihydro-1,2-oxazol-3-yl]-2-(1H-1,2,4-triazol-1-yl)benzonitril (II-29-64) (bekannt aus WO2007/075459), 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid (II-29-65) (bekannt aus WO2005/085216), 4-{[(6-Chlorpyridin-3-yl)methyl](cyclopropyl)amino}-1,3-oxazol-2(5H)-on (II-29-66), 4- {[(6-Chlorpyridin-3-yl)methyl](2,2-difluorethyl)amino}-1,3-oxazol-2(5H)-on (II-29-67), 4-{[(6-Chlorpyridin-3-yl)methyl](ethyl)amino}-1,3-oxazol-2(5H)-on (II-29-68), 4-1[(6-Chlorpyridin-3-yl)methyl](methyl)amino)-1,3-oxazol-2(5H)-on (II-29-69) (alle bekannt aus WO2010/005692), NNI-0711 (II-29-70) (bekannt aus WO2002/096882), 1-Acetyl-N-[4-(1,1,1,3,3,3-hexafluor-2-methoxypropan-2-yl)-3-isobutylphenyl]-N-isobutyryl-3,5-dimethyl-1H-pyrazol-4-carboxamid (II-29-71) (bekannt aus WO2002/096882), Methyl-2-[2-({[3-brom-1-(3-chlorpyridin-2-yl)-1H-pyrazol-5-yl]carbonyllamino)-5-chlor-3-methylbenzoyl]-2-methylhydrazincarboxylat (II-29-72) (bekannt aus WO2005/085216), Methyl-2-[2-({[3-brom-1-(3-chlorpyridin-2-yl)-1H-pyrazol-5-yl]carbonyllamino)-5-cyan-3-methylbenzoyl]-2-ethylhydrazincarboxylat (II-29-73) (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (II-29-74) (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-1,2-diethylhydrazincarboxylat (II-29-75) (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (II-29-76) (bekannt aus WO2005/085216), (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin (II-29-77) (bekannt aus WO2007/101369), 2-{6-[2-(5-Fluorpyridin-3-yl)-1,3-thiazol-5-yl]pyridin-2-yl}pyrimidin (II-29-78) (bekannt aus WO2010/006713), 2-{6-[2-(Pyridin-3-yl)-1,3-thiazol-5-yl]pyridin-2-yl}pyrimidin (II-29-79) (bekannt aus WO2010/006713), 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid (II-29-80) (bekannt aus WO2010/069502), 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid (II-29-81) (bekannt aus WO2010/069502), N-[2-(tert-Butylcarbamoyl)-4-cyan-6-methylphenyl]-1-(3-chlorpyridin-2-yl)-3-{[5-(trifluormethyl)-1H-tetrazol-1-yl]methyl}-1H-pyrazol-5-carboxamid (II-29-82) (bekannt aus WO2010/069502), N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid (II-29-83) (bekannt aus WO2010/069502), (lE)-N-[(6-Chlorpyridin-3-yl)methyl]-N'-cyan-N-(2,2-difluorethyl)ethanimidamid (II-29-84) (bekannt aus WO2008/009360), N-[2-(5-Amino-1,3,4-thiadiazol-2-yl)-4-chlor-6-methylphenyl]-3-brom-1-(3-chlorpyridin-2-yl)-1H-pyrazol-5-carboxamid (II-29-85) (bekannt aus CN102057925) und Methyl-2-[3,5-dibrom-2-({[3-brom-1-(3-chlorpyridin-2-yl)-1H-pyrazol-5-yl]carbonyl}amino)benzoyl]-2-ethyl-l-methylhydrazincarboxylat (II-29-86) (bekannt aus WO2011/049233).

Die hier mit ihrem "common name" genannten Wirkstoffe sind bekannt und beispielsweise im Pestizidhandbuch ("The Pesticide Manual" 14th Ed., British Crop Protection Council 2006) beschrieben oder im Internet recherchierbar (z.B. http://www.alanwood.net/pesticides).

Als weiterer Bestandteil enthält die vorliegende W/O-Formulierung Wasser. Die erfindungsgemäße W/O-Formulierung umfasst vorzugsweise 20 bis 85 Gew.-%, stärker bevorzugt 35 bis 60 Gew.-% Wasser.

In einer bevorzugten Ausführungsform der vorliegenden Erfindung enthält die erfindungsgemäße W/O-Formulierung vorzugsweise des Weitern mindestens einen Farbstoff und/oder mindestens einen Duftstoff. Vorzugweise umfasst die erfindungsgemäße Formulierung zumindest einen Farbstoff und zumindest einen Duftstoff.

Als Farbstoff können anorganische Pigmente, z.B. Eisenoxid, Titanoxid, Ferrocyanblau, organische Pigmente und Farbstoffe, wie Triphenylmethane, Diphenylmethane, Oxazine, Xanthene, Imininonaphthochinone, Azomethine und Anthrachinone, wie beispielsweise Oil Yellow #101, Oil Yellow #103, Oil Pink #312, Oil Red, Oil Green BG, Oil Blue BOS, Oil Blue #603, Oil Black BY, Oil Black BS, Oil Black T-505 (Orient Kagaku Kogyo), Victoria Purc Blue BOH (Hodogaya Kagaku), Patent Pure Blue (Sumitomo Mikuni Kagaku), Cyrstal Violet (CI 4255) Methyl Violet (CI 42535), Ethyl violet, Rhodamin B (CI 145170B), Malchit Green (CI 142000) Methylen Blue (CI 52015), Brilliant Blue, Methyl Green, Erythrocin B, Basic Fuchsine, m-Kresol Purple, Auramin, 4-p-Diethylaminophenyliminaphthochinon, Leucobasis-Farbstoffe und primäre oder sekundäre Acrylaminfarbstoffe, wie beispielsweise Triphenylamin, Diphenylamin, o-Chloroanilin, 1,23,-Triphenylganidin, Naphthylamin, Diaminodiphenylmethan, p,p-Bis-dimethylaminodiphenylamin, 1,2-Dianilinoethylen, p,p',p"-tris-Dimethylaminotriphenylmethan, p,p'-Bis-dimethylaminodiphenylmethylimin, p,p,p"-Triamino-o-methyltriphenylmethan, p,p'-Bis-dimethylaminodiphenyl-4-anilinonaphthylmethan, p,p',p"-Triaminotriphenylmethan, usw., eingesetzt werden.

Bevorzugt werden anionische, kationische oder basische Farbstoffe wie beispielhaft Xanthenfarbstoffe Ceravon Fast Rhodamine B 400% (DixonChew) und Sanolin Rhodamin B02 (Clariant), der Direktfarbstoff Levacell Violett BB fl. 40% (Lanxess), der Azofarbstoff Bayscript Magenta LB fl. (Lanxess), Ceracryl Magenta (DixonChew), Astra Red Violett 3RC liq. (Lanxess), Astra Phloxin G (Lanxess) und Cartazine Violet 4EK liq. (Clariant), eingesetzt.

Besonders bevorzugt werden anionische Farbstoffe wie beispielhaft die Xanthenfarbstoffe Ceravon Fast Rhodamine B 400% (DixonChew) und Sanolin Rhodamin B02 (Clariant), der Direktfarbstoff Levacell Violett BB fl. 40% (Lanxess) und der Azofarbstoff Bayscript Magenta LB fl. (Lanxess), verwendet.

Je nach Löslichkeit der Farbstoffe werden erfindungsgemäß weitere oberflächenaktive Substanzen eingesetzt, um die Farbstoffe zu lösen. Beispielsweise wird beim Einsatz eines Triaminotriphenylmethans vor Zugabe zu der erfindungsgemäßen Formulierung der Farbstoff mit Wasser und einer oberflächenaktiven Substanz vorzugsweise bei erhöhten Temperaturen (bis 70° C) gelöst. Als oberflächenaktive Substanz eignet sich beispielsweise ein nicht-ionisches grenzflächenaktives Mittel aus ethoxyliertem Alkohol (wie weitere oben beschrieben).

Natürliche Duftstoffe können beispielsweise ausgewählt sein aus der Gruppe bestehend aus Lavendel, Moschus, Zibet, Ambra, Castereum und ähnlichen Duftstoffen: Ajowaöl, Mandelöl, Ambrettesamen absol., Angelikawurzelöl, Anisol, Basilikumöl, Lorbeeröl, Benzoinresinoid, Bergamottessenz, Birkenöl, Rosenholzöl, Pfriemenkraut absol., Cajeputöl, Canangaöl, Gapiscumöl, Kümmelöl, Cardamonöl, Möhrensainenöl, Cassiaöl, Zedernholzöl, Selleriesamenöl, Zimtrindenöl, Zitronellöl, Muskattellersalbeiöl, Nelkenöl, Kognaköl, Korianderöl, Cubebenöl, Kampferöl, Dillöl, Estragonöl, Eukalyptusöl, Fenchelöl süß, Calbanumresinoid, Knoblauchöl, Geraniumöl, Ingweröl, Grapefruitöl, Hopfenöl, Hyacinthe absol., Jasmin absol., Wacholderbeerenöl, Labdanumresinoid, Lavandelöl, Lorbeerblätteröl, Zitronenöl, Lemonengrasöl, Liebstöckelöl, Macisöl, Mandarinenöl, Nfisoma absol., Myrrhe absol., Senföl, Narcisse absol., Neroliöl, Muskatnußöl, Eichenmoos absol., Olibanum-resinoid, Zwiebelöl, Opoponaxresinoid, Orangenöl, Orangenblütenöl, Iris konkret, Pfefferöl, Pfefferminzöl, Perubalsam, Petitgrainöl, Fichtennadelöl, Rose absol., Rosenöl, Rosmarinöl, Sandelholzöl, Salbeiöl, Krauseminzöl, Styraxöl, Thymianöl, Tolubalsam, Tonkabohnen absol., Tuberose absol., Terpentinöl, Vanilleschoten absol., Vetiveröl, Veilchenblätter absol., Ylang-Ylang-Öl und ähnliche Pflanzenöle usw. und deren Mischungen.

Als synthetische Duftstoffe können der erfindungsgemäßen Formulierung zugefügt werden: Pinen, Limonen und ähnliche Kohlenwasserstoffe, 3,3,5-Trimethylcyclohexanol, Linalool, Geraniol, Nerol, Citronellol, Menthol, Borneol, Borneylmethoxycyclohexanol, Benzylalkohol, Anisalkohol, Zimtalkohol, β-Phenylethylalkohol, cis-3-Hexanol, Terpineol und ähnliche Alkohole; Anethole, Moschusxylol, Isoeugenol, Methyleugenol und ähnliche Phenole; Amylzimtaldehyd, Anisaldehyd, n-Butyraldehyd, Cuminaldehyd, Cyclamenaldehyd, Decylaldehyd, Isobutyraldehyd, Hexylaldehyd, Heptylaldehyd, n-Nonylaldehydnonadienol, Citral, Citronellal, Hydroxycitronellal, Benzaldehyd, Methylnonylacetaldehyd, Zimtaldehyd, Dodecanol, Hexylzimtaldehyd, Undekanal, Heliotropin, Vanillin, Ethylvanillin und ähnliche Aldehyde, Methylamylketon, Methyl-ß-naphthylketon, Methylnonylketon, Moschusketon, Diacetyl, Acetylpropionyl, Acetylbutyryl, Carvon, Methon, Campher, Acetophenon, p-Methylacetophenon, Jonon, Methylionon und ähnliche Ketone; Amylbutyrolacton, Diphenyloxid, Methylphenylglycidat, Nonylaceton, Cumarin, Cineol, Ethylmethylphenylglycidat und ähnliche Lactone bzw. Oxide, Methylformat, Isopropylformiat, Linalylforniat, Ethylacetat, Octylacetat, Methylacetat, Benzylacetat, Cinnamylacetat, Butylpropionat, Isoamylacetat, Isopropyl-isobutyrat, Geranylisovalerat, Allyleapronat Butylheptylat, Octylcaprylat, Methylheptincarboxylat, Methyloctincarboxylat, Isoamylcaprylat, Methyllaurat, Ethylmyristat, Methylmyristat, Ethylbenzoat, Benzylbenzoat, Methylcarbinylphenylacetat, Isobutylphenylacetat, Methyleinnamat, Styracin, Methylsalicylat, Ethylanisat, Methylanthranilat, Ethylpyruvat, Ethylbutylbutyrat, Benzylpropionat, Butylacetat, Butylbutyrat, p-tert.-Butylcyclohexylacetat Cedrylacetat, Citronellylacetat, Citronellylformiat, p-Cresylacetat, Ethylbutyrat, Ethylcaproat, Ethylcinnamat, Ethylphenylacetat, Ethylenbrassylat, Geranylacetat, Geranylformiat, Isoamylsalicylat, Isoarnylvalerat, Isobomylacetat, Linalylacetat, Methylanthranilat, Methyldihydrojasmonat, Nonylacetat, ß-Phenylethylacetat, Trichlormethylenphenylcarbinylacetat, Terpinylacetat, Vetiverylacetat und ähnliche Ester. Diese Duftstoffe können einzeln verwendet werden oder mindestens zwei davon können im Gemisch miteinander verwendet werden. Neben dem Duftstoff kann die erfindungsgemäße Formulierung gegebenenfalls zusätzlich die in der Duftstoffindustrie üblichen Zusatzstoffe, wie Patchouliöl bzw. ähnliche flüchtigkeitshemmende Mittel, wie Eugenol bzw. ähnliche viskositätsregulierende Mittel enthalten.

Die erfindungsgemäßen Formulierung können auch desodorierende Mittel enthalten, wie z.B. Laurylmethacrylat, Geranylcrotonat, Acetophenon-myristat, p-Methylacetophenon-benzaldehyd, Benzylacetat, Benzylpropionat, Amylzimtaldehyd, Anisaldehyd, Diphenyloxid, Methylbenzoat, Ethylbenzoat, Methylphenylacetat, Ethylphenylacetat, Neolin, Safrol usw.

Bevorzugt sind die Duftstoffe bereits Bestandteil des nicht-wässrigen Lösungsmittels.

Generell umfasst die W/O-Formulierung vorzugsweise 1 bis 75 Gew.-%, noch bevorzugter 2 bis 55 Gew.-% eines Duftstoffs stärker bevorzugt im Ausmaß von 5 bis 15 Gew.-%.

Als weitere bevorzugte Ausführungsform der Erfindung umfasst die W/O-Formulierung vorzugsweise 0,01 bis 5 Gew.-%, noch bevorzugter 0,01 bis 1 Gew.-% eines Farbstoffs. Alle sich auf die W/O-Formulierung beziehenden Gewichtsprozentangaben der oben beschriebenen Komponenten ergeben in Summe höchstens 100%.

Gewünschtenfalls umfasst die erfindungsgemäße W/O-Formulierung weiterhin Additive oder Hilfsmittel, vorzugsweise Gefrierschutzmittel, Bitterstoffe, Stabilisatoren, Antischaummittel, Netzmittel Entschäumer und Konservierungsmittel. Beispiele für geeignete Gefrierschutzmittel sind Ethylenglycol, Monopropylenglycol, Glycerin, Hexylenglycol, 1-Methoxy-2-propanol, Cyclohexanol, insbesondere Monopropylenglycol. Als Bitterstoffe eignen sich insbesondere Aromaöle, vorzugsweise Pfefferminzöl, Eukalyptusöl, Bittermandelöl, Menthol, Fruchtaromastoffe, vorzugsweise Aromastoffe von Zitronen, Orangen, Limonen, Grapefruit oder Mischungen davon, und/oder Denatonium-Benzoat. Stabilisatoren, die gegebenenfalls der Formulierung zugesetzt werden, sind Säuren, vorzugsweise organische Säuren, wie Dodecylbenzolsulfonsäure, Essigsäure, Propionsäure oder Citronensäure, insbesondere Citronensäure, und Antioxidationsmittel, wie Butylhydroxytoluol (BHT), Butylhydroxyanisol (BHA), insbesondere Butylhydroxytoluol. Bevorzugte Antischaummittel und Entschäumer sind auf Silikon aufgebaut, besonders bevorzugt werden eine wässerige Emulsion von Dialkylpolysiloxanen, im Handel erhältlich als Rhodorsil®; 426R von Rhodia Chimie Frankreich, Wacker SE-Reihe von Wacker, Deutschland, und ein Gemisch von Dialkylpolysiloxanen als ein Öl, im Handel erhältlich als Rhodorsil®; 416 vom Rhodia Chimie, Frankreich, Wacker 5184 oder Wacker SL von Wacker, Deutschland.

Optional enthalten die erfindungsgemäßen Formulierungen auch weitere funktionale Additive, welche die Brenn- oder weitere Eigenschaften von Trägermaterialien, die mit der erfindungsgemäßen Formulierung behandelt werden, beeinflussen. Als Beispiele solcher Zusatzstoffe können Phosphatsalze (wie z.B. Natriumphosphate, Monoammoniumphosphate), organische Säuren (z.B. Trinatriumcitrat, Trikaliumcitrat, Natriumacetat, Natriumtartrat, Bernsteinsäure, Malonsäure usw.) und Wachse erwähnt werden. Weitere Beispiele solcher Zusatzstoffe sind mineralische anorganische Substanzen wie Titaniumdioxid, Calciumcarbonat, Schichtsilikate wie Kaolin, sowie organische Füllstoffe wie mikrokristalline Zellulose.

Ein weiterer Gegenstand der Erfindung betrifft die Verwendung einer erfindungsgemäßen Formulierung zum Behandeln eines Trägermaterials.

Erfindungsgemäß wird unter "Behandeln" ein Vorgang bezeichnet, bei dem ein Trägermaterial mit der Formulierung in Kontakt gebracht wird. Eine geeignete Behandlungsmethoden ist das Imprägnieren beispielsweise durch Besprühen des Trägermaterials mit der erfindungsgemäßen Formulierung und anschließendem Trocknen, z. B. an der Luft, oder Tauchen des Trägermaterials in der erfindungsgemäßen Formulierung und anschließendem Trocknen, z. B. an der Luft. Weitere geeignete Imprägniermethoden sind Imprägnieren mittels einer Pipette. Als weitere geeignete und bevorzugte Behandlungsmethode eignet sich insbesondere das Bedrucken des Trägermaterials mit der erfindungsgemäßen Formulierung.

Bevorzugt setzt man zum Bedrucken des Trägermaterials mit der Formulierung etablierte Auftragsmethoden oder Beschichtungsanlagen für den kontinuierlichen Betrieb ein. Bespielweise sind geeignete Druckmethoden und entsprechende Anlagen bekannt aus der graphischen Industrie (direkte und indirekte Druckverfahren) sowie aus der Papierindustrie (Streich- und Imprägniermethoden). Weitere bekannte Anlagen/Methoden sind die Rakelpresse, die Filmpresse, die Leimpresse, das Vorhangstreichen und weitere.

Besonders bevorzugt werden Tiefdruckmethoden, bei der die Übertragung der erfindungsgemäßen Formulierung direkt von der rotierenden Tiefdruckwalze auf das Trägermaterial erfolgt.

Es hat sich gezeigt, dass die vorliegende Formulierung besonders geeignet ist um mittels einer Tiefdruckmethode homogen auf ein Trägermaterial appliziert zu werden. Die erfindungsgemäße Formulierungen bleibt dabei physikalisch stabil und kann leicht hinsichtlich der rheologischen Eigenschaften (insbesondere Viskosität und Benetzungseigenschaften) an die ausgewählte Tiefdruckmethode angepasst werden. Im Rahmen der vorliegenden Erfindung bedeutet der Begriff "physikalisch stabil", dass in relevanter Zeitskala für die Anwendung der Formulierung beim Einschrittbeschichtungsverfahren insbesondere mittels einer Tiefdruckmethode keine signifikante oder makroskopische Phasentrennung der Wasser- und Ölphase bzw. Aufrahmung erfolgt.

Eine Anpassung der Viskosität der Formulierung an die Beschichtungsmethode kann unter Umständen erforderlich sein, um unerwünschte verfahrenstechnische Nebeneffekte (wie beispielweise inhomogene Filmspaltung und Nebelbildung, welche zu Inhomogenitäten in der Beschichtung führen können) zu vermeiden. Die Steuerung der Viskositätseigenschaften erfolgt diesbezüglich vorzugsweise über eine Veränderung der Gewichtsanteile des grenzflächenaktiven Emulgiersystems und/oder über eine Veränderung der Zusammensetzung des grenzflächenaktiven Emulgiersystems und/oder über die Veränderung der Anteile der wässrigen Phase zur kontinuierlichen "Ölphase".

Es hat sich gezeigt, dass bei Anwendung einer herkömmlichen Tiefdruckmethode und des unten definierten bevorzugten Papierträgermaterials eine Binghamviskosität der erfindungsgemäßen W/O Formulierung von zwischen 20 und 200 vorzugweise 30 bis 150 mPa·s bei 20°C vorteilhaft ist.

Die Bestimmung der Binghamviskosität basiert auf der Messung der Schubspannung bei zunehmender Scherrate. Die resultierende Schubspannungswerte [Pa] werden gegen die Scherrate [s⁻¹] aufgetragen. Die Binghamviskosität wird bei höheren Scherraten abgeleitet als Steigung der Regressionsgerade.

Die Viskositätsmessung erfolgt bei einer Temperatur von 20°C mit einem Rotationsviskosimeter mit nach DIN EN ISO 321 genormten Messsystemen vom Zylinder Typ (auch Doppelspalt-Systeme) und definiert einstellbarer Schergeschwindigkeit, z. B. der Firmen Haake, Bohlin, Mettler, Contraves und andere. Das Viskosimeter sollte Messungen in einem Scherratenbereich von 0,1 bis 1200 s⁻¹ ermöglichen.

Vorteilhaft an der erfindungsgemäßen W/O-Formulierungen ist, dass die Binghamviskosität ohne den Einsatz von polymeren Verdickern einstellbar ist, und somit eine sehr gute und homogene Übertragung von der Formulierung von der Tiefdruckwalze auf das Trägermaterial, auch bei erhöhter Produktionsgeschwindigkeit, gewährleistet werden kann. Bei Eintrocknung sind Formulierungsrückstände - im Gegensatz zu Formulierungen mit polymeren Verdickern - auf der Tiefdruckwalze leicht mit Wasser oder mit üblichen wässrigen Reinigungsmittel entfernbar.

Als Trägermaterialien kommen erfindungsgemäß insbesondere feste brennbare Materialien wie Zellulosematerialien, Textilmaterialien, Kunststoffmaterialien etc. in Frage. Trägermaterialien auf Zellulosebasis sind zum Beispiel Papier, Pappe, Holz, Holzschnitzel, Holzspäne oder Sägemehl, Reishülsen, Spindeln des Maiskolbens (vorzugsweise ohne Körner), Pecanußschalen und Erdnussschalen. Auch dünne Spannplatten kommen als Trägermaterial in Frage. Ein entsprechender Träger auf Cellulosebasis ist beispielsweise in der deutschen Patentanmeldung DE 43 223 76 A1 beschrieben, deren Offenbarung unter Bezugnahme in die vorliegende Anmeldung eingeschlossen wird.

Trägermaterialien aus Textilmaterialien sind beispielsweise synthetische Fasern aus Polyester oder Nylon oder Naturfasern, wie Baumwolle, Viskose, ein Leinen-Viskose-Gemisch oder ein Gemisch aus synthetischen und Naturfasern wie Cellulose-Polyester (synthetisches Papier) oder Baumwolle-Polyester. Weitere Beispiele sind Woll-Feltine und Trevira-Satin.

Trägermaterialien aus Kunststoffmaterialien sind beispielsweise Polycarbonate, Polyester, Polyamide und Polyterephthalate.

Im Rahmen der vorliegenden Erfindung ist die Verwendung von einem Trägermaterial auf Cellulosebasis insbesondere ein Papierträger besonders bevorzugt.

Grundsätzlich unterliegt der dabei verwendete Papierträger keinen besonderen Beschränkungen, so lange er im Allgemeinen dazu geeignet ist, mindestens einen entsprechenden insektiziden Wirkstoff aufzunehmen und nach einem Anzünden und einem Erlöschen des Papierträgers den mindestens einen insektiziden Wirkstoff, ohne ihn im Wesentlichen zu zersetzen, freizusetzen.

Es hat sich jedoch herausgestellt, dass Papierträger mit einem Papiergewicht von vorzugsweise 25 bis 300 g/m², insbesondere 25 bis 270 g/m², besonders bevorzugt 25 bis 250 g/m², ganz besonders bevorzugt 25 bis 230 g/m², weiter ganz besonders bevorzugt 25 bis 215 g/m², speziell 25 bis 200 g/m², für den erfindungsgemäßen Zweck besonders geeignet sind.

Darüber hinaus ist es bevorzugt, wenn die Dicke des Papierträgers in einem Bereich von 0,05 bis 0,50 mm, besonders bevorzugt 0,07 bis 0,40 mm, ganz besonders bevorzugt 0,08 bis 0,35, weiter ganz besonders bevorzugt zwischen 0,08 und 0,25 mm, speziell 0,08 bis 0,20 mm, liegt.

Geeignete Trägermaterialien sowie Verfahren zum Behandeln der Trägermaterialien sind auch in der Offenlegungsschrift WO2007/131679A2 beschrieben.

Ein weiterer Gegenstand der vorliegenden Erfindung betrifft die Verwendung der erfindungsgemäßen Wasser-in-Öl Formulierung zum Behandeln eines Trägermaterials. Vorzugsweise erfolgt das "Behandeln" durch Bedrucken des Trägermaterials. Noch bevorzugter erfolgt das Bedrucken des Trägermaterials über eine Tiefdruckverfahren, vorzugsweise durch ein "Einschritt"-Bedruckungsprozess.

Ein weiterer Gegenstand der vorliegenden Erfindung bezieht sich auf ein Trägermaterial, welches mit einer erfindungsgemäßen Wasser-in-Öl Formulierung behandelt wurde.

Es ist bevorzugt, wenn das Auftragsgewicht der (W/O)-Formulierung auf dem Träger (vorzugsweise dem Papierträger) in einem Bereich von 5 bis 30 ml/m², besonders bevorzugt von 12 bis 22 ml/m² und ganz besonders bevorzugt von 15 bis 20 ml/m² liegt.

Der Gehalt an insektizidem Wirkstoff auf einem erfindungsgemäßen Trägermaterial, insbesondere einem Papierträger ist vorzugsweise zwischen 0,05 bis 5,0 Gew.-%, noch bevorzugter zwischen 0,1 bis 2,5 Gew.-% und noch bevorzugter zwischen 0,2 und 1,5 Gew.-%.

Es ist bevorzugt, wenn der Brandsalz-Gehalt des behandelten Trägermaterials (vorzugsweise einem Papierträger) in einem Bereich von 0,1 bis 6 Gew.-%, besonders bevorzugt von 1 bis 5 Gew.-% und ganz besonders bevorzugt von 1,5 bis 3 Gew.-% liegt.

Generell umfasst das erfindungsgemäße Trägermaterial (insbesondere einem Papierträger) vorzugsweise 0,01 bis 10 Gew.-%, noch bevorzugter 0,05 bis 5 Gew.-%, besonders bevorzugt 0,1 bis 2 Gew.-%, mindestens eines grenzflächenaktiven Emulgatorsystems, wobei ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen eingesetzt wird.

Das erfindungsgemäße Trägermaterial (vorzugsweise einem Papierträger) enthält neben dem oben beschriebenen grenzflächenaktiven Emulgatorsystem zusätzlich mindestens noch ein weiteres nichtionisches grenzflächenaktiven Mittel, wobei dieses weitere grenzflächenaktive Mittel einen HLB-Wert im Bereich etwa 8 bis etwa 18, vorzugsweise 8 bis 18, noch bevorzugter zwischen etwa 10 bis etwa 16, vorzugsweise 10 bis 16, noch mehr bevorzugt zwischen etwa 11 bis etwa 16, vorzugsweise 11 bis 16 aufweist. Vorzugsweise liegt der Gewichtsanteil dieses weiteren nichtionischen grenzflächenaktiven Mittels zwischen 0,1 bis 4 Gew.-%, vorzugsweise 0,3 bis 1,5 Gew.-% bezogen auf das erfindungsgemäße Trägermaterial.

Es ist bevorzugt, dass das behandelte Trägermaterial einen Duftstoff enthält, welcher den Geruch des glimmbaren Endproduktes vor und nach Verglimmung positiv beeinflusst.

Es ist bevorzugt, wenn der Duftstoff-Gehalt des behandelten Trägermaterials (vorzugsweise einem Papierträger) in einem Bereich von 0,1 bis 10 Gew.-% , besonders bevorzugt von 0,5 bis 5 Gew.-% und ganz besonders bevorzugt von 1,0 bis 3 Gew.-% liegt.

In einer weiter bevorzugter Ausführungsform der Erfindung enthält das erfindungsgemäße Trägermaterial (vorzugsweise einem Papierträger) noch ein weiteres (drittes) anionisches grenzflächenaktives Mittel. Vorzugsweise liegt der Gewichtsanteil dieses weiteren anionischen grenzflächenaktiven Mittels zwischen 0 bis 5 Gew.-%, vorzugsweise 0,1 bis 2,5 Gew.-% bezogen auf das erfindungsgemäße Trägermaterial. Die verbleibenden, sich bis auf höchstens 100% aufsummierenden Gewichtsprozentanteile beziehen sich auf das Trägermaterial (vorzugsweise auf ein Papierträger) selber.

Ein weiterer Gegenstand der Erfindung betrifft eine Methode zur Herstellung der erfindungsgemäßen Wasser-in-Öl Formulierung umfassend folgende Schritte
a) Lösen mindestens eines Brandsalzes in Wasser,
b) Lösen mindestens eines insektiziden Wirkstoffes, wobei der mindestens eine insektizide Wirkstoff ein Pyrethroid ist, und mindestens einem Emulgiersystem, welches in einer 16%-Kaliumnitratsalzlösung eine Löslichkeit bei einer Temperatur von 20°C von weniger als 1g/L aufweist und ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen enthält und zumindest noch ein weiteres nichtionisches grenzflächenaktives Mittel in diesem Emulgiersystem vorhanden ist, wobei dieses weitere, nichtionische grenzflächenaktive Mittel einen HLB-Wert im Bereich von etwa 8 bis etwa 18 hat, in mindestens einem nichtwässrigen Lösungsmittel,
c) Vermischen der Lösung gemäß Schritt b) mit Lösung aus Schritt a).

Falls optional weitere wasserlösliche Formulierungskomponenten (wie z.B. kationische oder anionische Farbstoffe, weitere Additive) Bestandteil der W/O-Formulierung werden sollen, werden diese gleichzeitig mit dem Brandsalz in Schritt a) zum Wasser dazugegeben.

Falls optional weitere wasser-unlösliche flüssige Formulierungskomponenten (wie beispielsweise Duftstoffe, weitere Additive) Bestandteil der W/O-Formulierung werden sollen, dann werden diese vor Schritt b) zu dem nicht-wässrigen Lösungsmittel dazugemischt.

Das Vermischen zu einer erfindungsgemäßen W/O-Formulierung in Schritt c) erfolgt durch Homogenisierung über einfaches Rühren oder über ein herkömmliches Emulgierverfahren.

Ein weiter Gegenstand der vorliegenden Erfindung bezieht sich auf ein insektizides, glimmbares Produkt umfassend ein oben beschriebenes Trägermaterial sowie die Bestandteile der oben beschriebenen erfindungsgemäßen Wasser-in-Öl Formulierung, wobei das nicht-wässrige Lösungsmittel bei der Herstellung (z.B. bei einem der Herstellung nachgelagerten Trocknungsschritt oder später) aus dem Trägermaterial evaporieren kann.

Ein weiterer Gegenstand der Erfindung ist eine Methode zur Herstellung eines insektizides, glimmbaren Produkts, dadurch gekennzeichnet, dass ein Trägermaterial mit einer erfindungsgemäßen Wasser-in-Öl Formulierung behandelt wird. Vorzugsweise erfolgt die Herstellung durch Bedrucken des Trägermaterials mit der erfindungsgemäßen Wasser-in-Öl-Formulierung. Noch bevorzugter erfolgt das Bedrucken des Trägermaterials über eine Tiefdruckverfahren, vorzugsweise durch ein "Einschritt"-Bedruckungsprozess.

### Beispiele:

### Beispiel 1: Beschreibung der Herstellung der erfindungsgemäßen Formulierung

Es wurde gemäß oben angegebenem Herstellungsvorschrift (siehe Seite 21) folgende erfindungsgemäße Formulierung (Fl B = erfindungsgemäße Formulierung B; Fl A = nicht-erfindungsgemäße Formulierung A als Vergleich; Fl C = nicht-erfindungsgemäße Formulierung C als Vergleich) mit Transfluthrin angesetzt:

**Tabelle 1: Angabe der Formulierungskomponenten in Gewichtsprozenten bezogen auf die jeweils erfindungsgemäßen W/O Formulierungen. (Fl B = erfindungsgemäße Formulierung B).**

| **Formulierung** | **Fl B** |
|---|---|
| **Zusammensetzung** | **Gew %** |
| Transfluthrin technisch | 3,30 |
| OM 2044 (Duftstoff, IFF Inc.) | 9,60 |
| Solvesso 100 | 12,50 |
| Span 80 | 5,70 |
| Tween 80 | 1,95 |
| Kaliumnitrat | 12,50 |
| Wasser | 54,45 |
| Summe | 100,00 |

Zum Vergleich wurden auch folgende nicht-erfindungsgemäße Formulierungen mit Transfluthrin nach der gleichen oben genannten Herstellungsvorschrift angesetzt:

**Tabelle 2: Nicht-erfindungsgemäße Formulierung A (Fl A) und C (Fl C) zum Vergleich.**

| **Formulierung** | **Fl A** | **Fl C** |
|---|---|---|
| **Zusammensetzung** | **Gew %** | **Gew %** |
| Transfluthrin technisch | 3,30 | 3,30 |
| OM 2044 (Duftstoff, IFF Inc.) | 9,60 | 9,60 |
| Solvesso 100 | 12,50 | 12,50 |
| Span 80 | 7,65 | 0 |
| Tween 80 | 0 | 7,65 |
| Potassium nitrate | 12,50 | 12,50 |
| Wasser | 54,45 | 54,45 |
| Summe | 100,00 | 100,00 |

Das Vermischen der Formulierungen laut Herstellungsschritt c) (siehe S. 21) erfolgte durch einfaches Rühren mit Hilfe eines herkömmlichen Magnetrührers.

Die spezifische Leitfähigkeit wurde mit Hilfe eines Laborgeräts von Knick (Portamess® 911 Cond in Kombination mit Leitfähigkeitssensor SE 204) charakterisiert. Die Binghamviskosität der homogenisierten Formulierungen wurde mit einem Rheometer von Haake (Haake RS-150, Sensor Z20 Din Ti) bei 20°C ermittelt. Die Ergebnisse beider Untersuchungen sind in folgender Tabelle 3 dargestellt:

**Tabelle 3: Binghamviskosität und spezifische Leitfähigkeit der gemäß Beispiel 1 hergestellten Formulierungen.**

| **Formulierung** | **Fl A** | **Fl B** | **Fl C** |
|---|---|---|---|
| Binghamviskosität (mPa.s) | 37 | 65 | 12 |
| spezifische Leitfähigkeit | 0,6 µS/cm | 1,5 µS/cm | 59,4 mS/cm |
| Typ der Emulsion | W/O | W/O | O/W |

### Beispiel 2: Beschreibungen der Herstellung des erfindungsgemäßen insektiziden, glimmbaren Produkts

Zur Herstellung der insektiziden Papieren wurden die in Beispiel 1 beschriebenen Wirksstoffformulierungen (Fl A, **Fl** B und Fl C als Kontrolle) in einem Tiefdruckverfahren mit definiertem Auftragsgewicht auf das Trägermaterial vollflächig und homogen aufgetragen. Als Trägermaterial wurde das Offsetpapier Tauro Offset 90 gm (Robert Horn Group) eingesetzt. Die Auftragung der Formulierungen erfolgte in einem Schritt mit dem Bedruckbarkeitsprüfer PhantomQD™ Proofer (HARPER Graphics GmbH) und dem Rasterwalze 306 140 100 20.0C (theoretisches Schöpfvolumen ca. 31 cm³/m² und 60 Grad Gravurwinkel, HARPER Graphics GmbH). Die Formulierung wurde mit konstantem Druck und mit einem Auftragsgewicht von etwa 16g/m² direkt von der Tiefdruckwalze auf ein Papierstreifen übertragen. Die bedruckten Papierstreifen wurden mindestens eine Stunde an der Raumluft getrocknet und anschließend auf Druckqualität (über visuelle Bewertung der Homogenität der Papiereinfärbung) und Glimmverhalten geprüft.

Das Glimmverhalten wurde dadurch überprüft, dass man die beschichteten Papierstreifen in Längsrichtung faltet, auf einer Seite anzündet, die resultierende Flamme ausblast und es auf einem feuerfesten Substrat zum kompletten Verglimmen hinstellt. Die Vollständigkeit des Verglimmens oder Verschwelens vom Papierstreifen gilt als Maß für das Glimmverhalten des beschichteten Papierstreifens.

**Tabelle 4: Qualität der Beschichtung und Glimmverhalten der gemäß Beispiel 2 hergestellten insektiziden, glimmbaren Produkte.**

| **Insektizides, glimmbares Produkt** | | | |
|---|---|---|---|
| **aufgetragene Formulierung** | **Fl A** | **Fl B** | **Fl C** |
| Auftragsgewicht (g/m²) | 16 | 16 | 16 |
| Qualität der Beschichtung | homogen | homogen | inhomogen |
| Glimmverhalten | vollständig | vollständig | nicht vollständig |

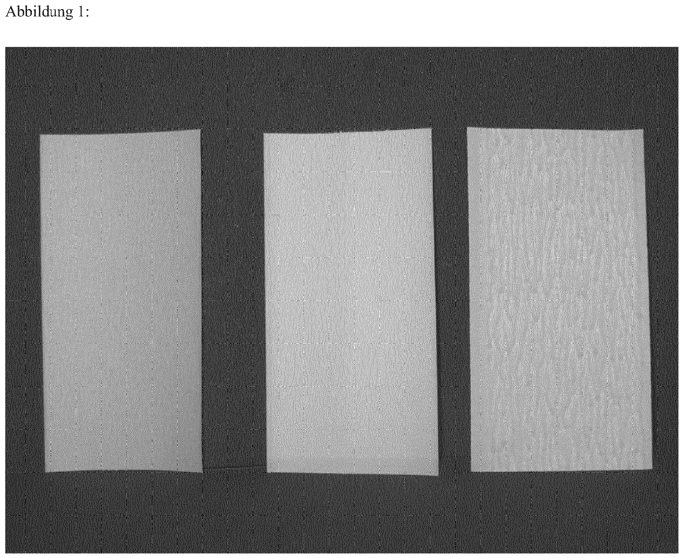

In Abbildung 1 ist die Qualität der Beschichtung der gemäß Beispiel 2 hergestellten insektiziden, glimmbaren Produkte (aufgetragene Formulierungen von links nach rechts: Fl A, Fl B und Fl C) dargestellt. Während Fl A und Fl B eine homogene Beschichtung aufweisen, ist bei Fl C eine inhomogene Beschichtung erkennbar.

### Beispiel 3: Beschreibung der Herstellung einer erfindungsgemäßen Formulierung ohne Duftstoff und insektiziden, glimmbaren Produkts

Analog Beispiel 1 wurde gemäß oben angegebenem Herstellungsvorschrift (siehe Seite 21) folgende erfindungsgemäßen Formulierung D (FL D) ohne Duftstoff mit Transfluthrin angesetzt.

| **Formulierung** | **Fl D** |
|---|---|
| **Zusammensetzung** | **Gew %** |
| Transfluthrin technisch | 3,30 |
| Solvesso 100 | 20,00 |
| Span 80 | 5,70 |
| Tween 80 | 1,95 |
| Potassium nitrate | 12,50 |
| Wasser | 56,55 |
| Summe | 100,00 |

Analog an Beispiel 2 wurde die Formulierung D zur Herstellung eines insektiziden Papiers eingesetzt. Die Auftragung der Formulierungen erfolgte in einem Schritt mit dem Bedruckbarkeitsprüfer PhantomQD™ Proofer (HARPER Graphics GmbH) und dem Rasterwalze 306 140 100 20.0C (theoretisches Schöpfvolumen ca. 31 cm³/m² und 60 Grad Gravurwinkel, HARPER Graphics GmbH) auf das Offsetpapier Tauro Offset 90 gm (Robert Horn Group). Die W/O-Formulierung mit einer spezifischen Leitfähigkeit < 0,1 mS/cm wurde mit konstantem Druck und mit einem Auftragsgewicht von effektiv etwa 16 g/m² direkt von der Tiefdruckwalze auf ein Papierstreifen übertragen. Nach anschließender Trockung an der Raumluft wurde ein homogen eingefärbtes insektizides Papier erhalten. Das insektizide Papier verglimmte vollständig.

## Patentansprüche

1. Eine Wasser-in-Öl Formulierung umfassend
a) ein grenzflächenaktives Emulgiersystem, welches in einer 16%-Kaliumnitratsalzlösung eine Löslichkeit bei einer Temperatur von 20°C von weniger als 1g/L aufweist, wobei ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen eingesetzt wird und zumindest noch ein weiteres nichtionisches grenzflächenaktives Mittel in diesem Emulgiersystem vorhanden ist, wobei dieses weitere, nichtionische grenzflächenaktive Mittel einen HLB-Wert im Bereich von etwa 8 bis etwa 18 hat,
b) mindestens ein nicht-wässriges Lösungsmittel,
c) mindestens ein Brandsalz,
d) mindestens einen insektiziden Wirkstoff, wobei der mindestens eine insektizide Wirkstoff ein Pyrethroid ist,
und
e) Wasser.

2. Eine Wasser-in-Öl Formulierung gemäß Anspruch 1, **dadurch gekennzeichnet, dass** das das eine nichtionisches, grenzflächenaktive Mittel mit einem HLB-Wert im Bereich von etwa 2 bis etwa 10 ausgewählt ist aus der Gruppe bestehend aus: Alkylphenolethoxylate, Alkanolethoxylate, Alkylaminethoxylate, Sorbitanester und deren Ethoxylate, Ricinusölethoxylate, Ethyleneoxid/ Propylenoxidblockcopolymere, Alkanol/Propylenoxid/Ethylenoxidcopolymere, Polyglycerole, Polyglycerolester.

3. Eine Wasser-in-Öl Formulierung gemäß einem der vorherigen Ansprüche, **dadurch gekennzeichnet, dass** das Brandsalz Kaliumnitrat ist.

4. Eine Wasser-in-Öl Formulierung gemäß einem der vorherigen Ansprüche, **dadurch gekennzeichnet, dass** die Formulierung weiter mindestens einen Farbstoff und/oder mindestens einen Duftstoff enthält.

5. Verwendung einer Wasser-in-Öl Formulierung nach einem der vorherigen Ansprüche zum Behandeln eines Trägermaterials.

6. Trägermaterial, welches mit einer Wasser-in-Öl Formulierung nach einem der Ansprüche 1 bis 4 bedruckt wurde.

7. Trägermaterial nach Anspruch 6, **dadurch gekennzeichnet, dass** das Trägermaterial ein Papierträger ist.

8. Methode zur Herstellung der erfindungsgemäßen Wasser-in-Öl Formulierung umfassend folgende Schritte
a) Lösen mindestens eines Brandsalzes in Wasser,
b) Lösen mindestens eines insektiziden Wirkstoffes, wobei der mindestens eine insektizide Wirkstoff ein Pyrethroid ist, und einem Emulgiersystem, welches in einer 16%-Kaliumnitratsalzlösung eine Löslichkeit bei einer Temperatur von 20°C von weniger als 1g/L aufweist und ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen enthält und zumindest noch ein weiteres nichtionisches grenzflächenaktives Mittel in diesem Emulgiersystem vorhanden ist, wobei dieses weitere, nichtionische grenzflächenaktive Mittel einen HLB-Wert im Bereich von etwa 8 bis etwa 18 hat, in mindestens einem nicht-wässrigen Lösungsmittel,
c) Vermischen der Lösung gemäß Schritt b) mit Lösung aus Schritt a).

9. Insektizides, glimmbares Produkt umfassend
a) ein Trägermaterial,
b) mindestens ein Emulgiersystem, welches jeweils in einer 16%-Kaliumnitratsalzlösung eine Löslichkeit bei einer Temperatur von 20°C von weniger als 1g/L aufweist und ein nichtionisches, grenzflächenaktives Mittel mit einem HLB-Wert im Bereich von etwa 2 bis etwa 10 oder ein ionisches grenzflächenaktives Mittel ausgewählt aus der Gruppe bestehend aus Alkylsulfonate, Arylsulfonate, Alkylarylsulfonate, Arylethersulfonate, Ligninsulfonate, Alkylsulfate, Alkylethersulfate, Sulfosuccinate, aliphatische und aromatische Phosphatester, alkoxylierte Phosphatester, Alkylcarboxylate sowie Polycarboxylate; jeweils als Salz mit einwertigen oder mehrwertigen Kationen enthält und zumindest noch ein weiteres nichtionisches grenzflächenaktives Mittel in diesem Emulgiersystem vorhanden ist, wobei dieses weiteren, nichtionische grenzflächenaktive Mittel einen HLB-Wert im Bereich von etwa 8 bis etwa 18 hat,
c) mindestens ein Brandsalz,
d) mindestens einen insektiziden Wirkstoff, wobei der mindestens eine insektizide Wirkstoff ein Pyrethroid ist,
und
e) Wasser.

10. Methode zur Herstellung eines Trägermaterials gemäß Anspruch 6, 7 oder einem insektiziden, glimmbaren Produkt gemäß 9, **dadurch gekennzeichnet, dass** ein Trägermaterial mit einer Wasser-in-Öl Formulierung nach einem der Ansprüche 1 bis 4 bedruckt wird.

11. Methode nach Anspruch 10, **dadurch gekennzeichnet, dass** das Trägermaterial mit einer Wasser-in-Öl Formulierung nach einem der Ansprüche 1 bis 4 mittels einer Tiefdruckmethode in einem Einschrittprozess bedruckt wird.

## Claims

1. A water-in-oil formulation comprising
a) a surface-active emulsifying system which has a solubility in a 16% potassium nitrate salt solution at a temperature of 20°C of less than 1 g/l, where a nonionic surface-active agent with an HLB value of in the range from approximately 2 to approximately 10 or an ionic surface-active agent selected from the group consisting of alkylsulfonates, arylsulfonates, alkylarylsulfonates, aryl ether sulfonates, lignosulfonates, alkyl sulfates, alkyl ether sulfates, sulfosuccinates, aliphatic and aromatic phosphate esters, alkoxylated phosphate esters, alkylcarboxylates and polycarboxylates is used, in each case as a salt with monovalent or polyvalent cations, and at least one further additional nonionic surface-active agent is present in this emulsifying system, where this further nonionic surface-active agent has an HLB value of in the range from approximately 8 to approximately 18,
b) at least one nonaqueous solvent,
c) at least one burning salt,
d) at least one insecticidal active substance, where the at least one insecticidal active substance is a pyrethroid,
and
e) water.

2. A water-in-oil formulation according to Claim 1, **characterized in that** one nonionic surface-active agent with an HLB value of in the range from approximately 2 to approximately 10 is selected from the group consisting of: alkylphenol ethoxylates, alkanol ethoxylates, alkylamine ethoxylates, sorbitan esters and their ethoxylates, castor oil ethoxylates, ethylene oxide/propylene oxide block copolymers, alkanol/propylene oxide/ethylene oxide copolymers, polyglycerols, polyglycerol esters.

3. A water-in-oil formulation according to one of the preceding claims, **characterized in that** the burning salt is potassium nitrate.

4. A water-in-oil formulation according to one of the preceding claims, **characterized in that** the formulation additionally comprises at least one colorant and/or at least one fragrance.

5. Use of a water-in-oil formulation according to one of the preceding claims for treating a support.

6. Support which has been printed with a water-in-oil formulation according to one of Claims 1 to 4.

7. Support according to Claim 6, **characterized in that** the support is a paper support.

8. Method for the preparation of the water-in-oil formulation according to the invention, comprising the following steps:
a) dissolving at least one burning salt in water,
b) dissolving, in at least one nonaqueous solvent, at least one insecticidal active substance, where the at least one insecticidal active substance is a pyrethroid, and an emulsifying system which has a solubility in a 16% potassium nitrate salt solution at a temperature of 20°C of less than 1 g/l and contains a nonionic surface-active agent with an HLB value of in the range from approximately 2 to approximately 10 or an ionic surface-active agent selected from the group consisting of alkylsulfonates, arylsulfonates, alkylarylsulfonates, aryl ether sulfonates, lignosulfonates, alkyl sulfates, alkyl ether sulfates, sulfosuccinates, aliphatic and aromatic phosphate esters, alkoxylated phosphate esters, alkylcarboxylates and polycarboxylates, in each case as a salt with monovalent or polyvalent cations, and at least one further additional nonionic surface-active agent is present in this emulsifying system, where this further nonionic surface-active agent has an HLB value of in the range from approximately 8 to approximately 18,
c) mixing of the solution of step b) with the solution of step a).

9. Insecticidal, smoulderable product, comprising
a) a support,
b) at least one emulsifying system which in each case has a solubility in a 16% potassium nitrate salt solution at a temperature of 20°C of less than 1 g/l and contains a nonionic surface-active agent with an HLB value of in the range from approximately 2 to approximately 10 or an ionic surface-active agent selected from the group consisting of alkylsulfonates, arylsulfonates, alkylarylsulfonates, aryl ether sulfonates, lignosulfonates, alkyl sulfates, alkyl ether sulfates, sulfosuccinates, aliphatic and aromatic phosphate esters, alkoxylated phosphate esters, alkylcarboxylates and polycarboxylates, in each case as a salt with monovalent or polyvalent cations, and at least one further nonionic surface-active agent is present in this emulsifying system, where this further nonionic surface-active agent has an HLB value of in the range from approximately 8 to approximately 18,
c) at least one burning salt,
d) at least one insecticidal active substance, where the at least one insecticidal active substance is a pyrethroid,
and
e) water.

10. Method for the preparation of a support according to Claim 6, 7 or an insecticidal smoulderable product according to Claim 9, **characterized in that** a support is printed with a water-in-oil formulation according to one of Claims 1 to 4.

11. Method according to Claim 10, **characterized in that** the support is printed with a water-in-oil formulation according to one of Claims 1 to 4 by means of a gravure method in a one-step process.

## Revendications

1. Formulation eau-dans-huile comprenant
a) un système émulsifiant tensioactif, qui présente une solubilité dans une solution de sel de nitrate de potassium à 16 % à une température de 20 °C inférieure à 1 g/L, un agent tensioactif non ionique comportant une valeur de HLB (hydrophilic-lipophilic balance - équilibre hydrophile-lipophile) dans la plage d'environ 2 à environ 10 ou un agent tensioactif ionique choisi dans le groupe constitué par les alkylsulfonates, les arylsulfonates, les alkylarylsulfonates, les aryléthersulfonates, les lignosulfonates, les alkylsulfates, les alkyléthersulfates, les sulfosuccinates, les esters de phosphate aliphatiques et aromatiques, les esters de phosphate alcoxylés, les carboxylates d'alkyle ainsi que les polycarboxylates ; étant utilisé à chaque fois en tant que sel avec des cations monovalents ou polyvalents et au moins encore un agent tensioactif non ionique supplémentaire étant présent dans ce système émulsifiant, cet agent tensioactif non ionique supplémentaire possédant une valeur de HLB dans la plage d'environ 8 à environ 18,
b) au moins un solvant non aqueux,
c) au moins un sel régulateur de combustion,
d) au moins un principe actif insecticide, l'au moins un principe actif insecticide étant un pyréthroïde,
et
e) de l'eau.

2. Formulation eau-dans-huile selon la revendication 1, **caractérisée en ce que** l'agent tensioactif non ionique comportant une valeur de HLB dans la plage d'environ 2 à environ 10 est choisi dans le groupe constitué par : les éthoxylates d'alkylphénol, les éthoxylates d'alcanol, les éthoxylates d'alkylamine, les esters de sorbitane et leurs éthoxylates, les éthoxylates d'huile de ricin, les copolymères à bloc oxyde d'éthylène/oxyde de propylène, les copolymères alcanol/oxyde de propylène/oxyde d'éthylène, les polyglycérols, les esters de polyglycérol.

3. Formulation eau-dans-huile selon l'une quelconque des revendications précédentes, **caractérisée en ce que** le sel régulateur de combustion est le nitrate de potassium.

4. Formulation eau-dans-huile selon l'une quelconque des revendications précédentes, **caractérisée en ce que** la formulation contient en outre au moins un colorant et/ou au moins un parfum.

5. Utilisation d'une formulation eau-dans-huile selon l'une quelconque des revendications précédentes pour le traitement d'un matériau de support.

6. Matériau de support, qui a été imprimé avec une formulation eau-dans-huile selon l'une quelconque des revendications 1 à 4.

7. Matériau de support selon la revendication 6, **caractérisé en ce que** le matériau de support est un support en papier.

8. Procédé pour la préparation de la formulation eau-dans-huile de l'invention comprenant les étapes suivantes
a) dissolution d'au moins un sel régulateur de combustion dans de l'eau,
b) dissolution d'au moins un principe actif insecticide, l'au moins un principe actif insecticide étant un pyréthroïde, et d'un système émulsifiant, qui présente une solubilité dans une solution de sel de nitrate de potassium à 16 % à une température de 20 °C inférieure à 1 g/L et contient un agent tensioactif non ionique comportant une valeur de HLB (hydrophilic-lipophilic balance - équilibre hydrophile-lipophile) dans la plage d'environ 2 à environ 10 ou un agent tensioactif ionique choisi dans le groupe constitué par les alkylsulfonates, les arylsulfonates, les alkylarylsulfonates, les aryléthersulfonates, les lignosulfonates, les alkylsulfates, les alkyléthersulfates, les sulfosuccinates, les esters de phosphate aliphatiques et aromatiques, les esters de phosphate alcoxylés, les carboxylates d'alkyle ainsi que les polycarboxylates ; à chaque fois en tant que sel avec des cations monovalents ou polyvalents et au moins encore un agent tensioactif non ionique supplémentaire est présent dans ce système émulsifiant, cet agent tensioactif non ionique supplémentaire possédant une valeur de HLB dans la plage d'environ 8 à environ 18, dans au moins un solvant non aqueux,
c) mélange de la solution selon l'étape b) avec la solution de l'étape a).

9. Produit insecticide apte à brûler faiblement comprenant
a) un matériau de support,
b) au moins un système émulsifiant, qui présente à chaque fois une solubilité dans une solution de sel de nitrate de potassium à 16 % à une température de 20 °C inférieure à 1 g/L et contient un agent tensioactif non ionique comportant une valeur de HLB (hydrophilic-lipophilic balance - équilibre hydrophile-lipophile) dans la plage d'environ 2 à environ 10 ou un agent tensioactif ionique choisi dans le groupe constitué par les alkylsulfonates, les arylsulfonates, les alkylarylsulfonates, les aryléthersulfonates, les lignosulfonates, les alkylsulfates, les alkyléthersulfates, les sulfosuccinates, les esters de phosphate aliphatiques et aromatiques, les esters de phosphate alcoxylés, les carboxylates d'alkyle ainsi que les polycarboxylates ; à chaque fois en tant que sel avec des cations monovalents ou polyvalents et au moins encore un agent tensioactif non ionique supplémentaire est présent dans ce système émulsifiant, cet agent tensioactif non ionique supplémentaire possédant une valeur de HLB dans la plage d'environ 8 à environ 18,
c) au moins un sel régulateur de combustion,
d) au moins un principe actif insecticide, l'au moins un principe actif insecticide étant un pyréthroïde,
et
e) de l'eau.

10. Procédé pour la préparation d'un matériau de support selon la revendication 6, 7 ou d'un produit insecticide apte à brûler faiblement selon la revendication 9, **caractérisé en ce qu'**un matériau de support est imprimé avec une formulation eau-dans-huile selon l'une quelconque des revendications 1 à 4.

11. Procédé selon la revendication 10, **caractérisé en ce que** le matériau de support est imprimé avec une formulation eau-dans-huile selon l'une quelconque des revendications 1 à 4 au moyen d'un procédé d'héliogravure dans un procédé en une étape.
